# EUROPEAN PATENT SPECIFICATION

(11) **EP 3 681 251 B1**
(45) Date of publication and mention of the grant of the patent: **20.07.2022**
(21) Application number: 19151581.6
(22) Date of filing: 14.01.2019
(51) Int. Cl.: H05B 47/105, H05B 47/16

(54) **PREDICTIVE LIGHTING CONTROL**
PRÄDIKTIVE BELEUCHTUNGSSTEUERUNG
COMMANDE D'ÉCLAIRAGE PRÉDICTIVE

(43) Date of publication of application: 15.07.2020
(73) Proprietor: Helvar Oy Ab, 02150 Espoo (FI)
(72) Inventor: NASIR, Omar, 20150 Espoo (FI)
(74) Representative: Berggren Oy

(56) References cited:
- EP-A1- 3 300 459
- US-A1- 2012 153 868
- US-A1- 2018 139 822

## Description

### TECHNICAL FIELD

The example and non-limiting embodiments of the present invention relate to lighting system control.

### BACKGROUND

In many scenarios, a lighting system of one or more luminaires is controlled based on presence of one or more persons in the space illuminated by the respective luminaire(s) such that the lights are switched (and kept) on while presence of one or more persons in the space is detected and switched (and kept) off while no persons are detected in the space.

In a typical solution, a controller receives respective sensor signals from one or more passive infrared (PIR) sensors, determines occupancy or non-occupancy accordingly, and switches (or keeps) the lights on in response to occupancy and switches (or keeps) the lights off in response to non-occupancy. PIR sensors, however, serve to detect motion instead of presence, and hence in such an arrangement motion in the space monitored by the one or more PIR sensors is interpreted as motion and absence of motion is interpreted as non-occupancy.

Since the controller relying on one or more PIR sensors is actually responsive to motion instead of actual presence, the resulting control is prone to errors in determining the state of occupancy. As particular examples, the controller may erroneously determine non-occupancy if all occupants in the monitored space are motionless and/or erroneously determine occupancy in response to motion that is not that of persons in the monitored space. Hence, lighting system control based on PIR sensors introduces uncertainty in determining the state of occupancy, which may lead to false positive indications when the controller incorrectly determines occupancy and/or false negative indications when the controller incorrectly determines non-occupancy.

A known solution for compensating the inherent uncertainty associated with the PIR sensor based lighting system control involves usage of a delay timer: the controller starts the delay timer in response to determining a change from occupancy to non-occupancy and switches the lights off only after the delay timer has elapsed. Such an approach implements a safety-net in order to avoid user discomfort that is likely to arise in case of switching the lights off while an occupant is still in the space. To reach this goal, the delay timers with a relatively long time delay are applied to reduce the likelihood of switching the lights off in response to an occupant being substantially motionless for a prolonged period of time and/or when a relatively slowly-moving occupant is moving away from the illuminated space but is still in immediate vicinity of the illuminated space. Consequently, in order to avoid user discomfort, in many occasions the delay timer based control results in keeping the lights on for periods during which no occupants are present, which in turn leads to unnecessary use of energy for illuminating a non-occupied space.

In related art, US 2018/139822 A1 discloses a method, apparatus, and system for security and/or automation systems, for adjusting a home environment. Some example methods involving a lighting system may include receiving data relating to an occupant of a home from a sensor, analyzing the data, identifying the occupant based at least in part on the analyzing, and initiating an adjustment of the lighting system based at least in part on the identifying. One such example may also include searching a catalog of occupant profiles and comparing the data with the catalog of occupant profiles. Some other example methods may initiate adjustments to an environment based on an occupant's preferences (whether those preferences are already included in a profile or determined by analysis) such as for example the occupant's lighting preferences (in an example involving a lighting system). One example method may also include correlating data relating to the occupant with the occupant's profile.

### SUMMARY

Therefore, it is an object of the present invention to provide a lighting control technique that enables shortening the periods of providing light output at high light intensity despite non-occupancy in the illuminated space while at the same time ensuring user comfort.

The invention is defined by a lighting control system according to claim 1, a method according to claim 12 and a computer program according to claim 14. Further embodiments are set out in the dependent claims.

According to the invention, a lighting control system for controlling illumination in a space is provided, the lighting control system comprising a controller arranged to control light output of a luminaire based at least in part on a sensor signal from a motion sensor arranged to observe movement in said space, the controller comprising: an occupancy determiner arranged to derive a time series of occupancy indications based on the sensor signal, wherein each occupancy indication indicates one of occupancy or non-occupancy in said space at the respective time instant; an occupancy predictor arranged to derive a predicted occupancy state of said space for a lookahead period based on occupancy indications within a lookback period; and a lighting controller arranged to provide predictive control of the light output from the luminaire based on the predicted occupancy state, wherein the lighting controller is arranged to: one of switch or keep the light on in response to the predicted occupancy state indicating occupancy, and initiate reduction of the light output to take place within a predefined delay period in response to the predicted occupancy state indicating non-occupancy, wherein the lighting controller is further arranged to carry out the following after said lookahead period: compute energy consumption during said lookahead period; and shorten the duration of said predefined delay period for the next lookahead period in response to the energy consumption during said lookahead period exceeding a predefined energy consumption threshold.

According to the invention, a method for controlling a light output from a luminaire based at least in part on a sensor signal from a motion sensor arranged to observe movement in a space illuminated by the luminaire is provided, the method comprising deriving a time series of occupancy indications based on the sensor signal, wherein each occupancy indication indicates one of occupancy or non-occupancy in said space at the respective time instant; deriving a predicted occupancy state of said space for a lookahead period based on occupancy indications within a lookback period; and providing predictive control of the light output from the luminaire based on the predicted occupancy state, the predictive control of light output comprising one of switching or keeping the light on in response to the predicted occupancy state indicating occupancy, and initiating reduction of the light output to take place within a predefined delay period in response to the predicted occupancy state indicating non-occupancy, wherein the method further comprises estimating energy consumption during said lookahead period; and shortening the duration of said predefined delay period for the next lookahead period in response to the energy consumption during said lookahead period exceeding a predefined energy consumption threshold.

According to another example embodiment, a computer program is provided, the computer program comprising computer readable program code configured to cause performing at least a method according to the example embodiment described in the foregoing when said program code is executed by one or more computing apparatuses.

The computer program according to an example embodiment may be embodied on a volatile or a non-volatile computer-readable record medium, for example as a computer program product comprising at least one computer readable non-transitory medium having program code stored thereon, the program which when executed by one or more apparatuses causes the one or more apparatuses at least to perform the operations described hereinbefore for the computer program according to an example embodiment of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features.

Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 illustrates a block diagram of some components of a lighting system according to an example;
Figure 2 illustrates a block diagram of some components of a controller according to an example;
Figure 3A illustrates an energy consumption function according to an example;
Figure 3B illustrates a user discomfort function according an example;
Figure 4 illustrates a lighting control method according to an example; and
Figure 5 illustrates a block diagram of some elements of an apparatus according to an example.

### DESCRIPTION OF SOME EMBODIMENTS

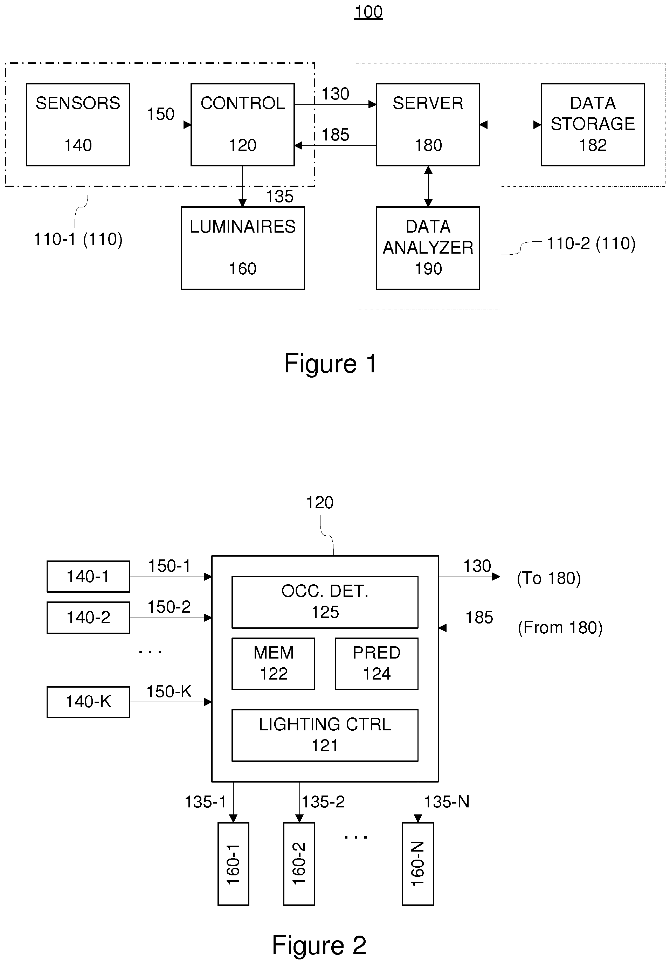

Figure 1 illustrates a block diagram of some components of a lighting system 100 according to an example. The lighting system 100 depicted in Figure 1 comprises one or more luminaires 160 for illuminating a desired space, one or more presence sensors 140 for providing respective sensor signals 150 that are descriptive of presence of one more persons detected in the desired space, a controller 120 for controlling light output from the one or more luminaires 160 based at least in part on information received in respective sensor signals 150 from the one or more presence sensors 140 and a server 180 for processing occupancy data 130 derived at the controller 120. The controller 120 and the one or more presence sensors 140 may be considered as a lighting control system 110 for controlling illumination in the desired space or as a front-end sub-system 110-1 of such a lighting control system 110.

The example shown in Figure 1 further shows a data storage entity 182 and a data analyzer 190 as separate entities that are communicatively coupled to the server 180. In other examples, the data storage entity 182 and/or the data analyzer may be components (or sub-entities) of the server 180. The server 180, the data storage entity 182 and the data analyzer 190 may be considered as a back-end sub-system 110-2 of the lighting control system 110. The server 180 is shown in the example of Figure 1 as a single entity. This, however, is a choice made for clarity of illustration and the server 180 is to be construed as a logical entity that may be implemented by a single (server) device or by a combination of two or more (server) devices that may be arranged to provide, for example, a cloud computing service.

When the lighting system 100 is provided for use in practical conditions, the one or more luminaires 160 are typically arranged to illuminate a desired indoor space (such as a room, a sub-space within a room, a corridor, etc.) or a desired outdoor area, whereas the one or more presence sensors 140 are arranged to observe and/or monitor movement within the desired space or area. It should be noted, however, the that the term motion sensors' herein is predominantly a functional definition of the underlying sensor devices and a sensor serving as one of the one or more motion sensors 140 may be provided as any sensor device that are capable of providing a sensor signal that enables either directly or indirectly deriving an indication of one or more persons being present in the area or space monitored by the sensor device.

According to a non-limiting example, the one or more motion sensors 140 may comprise, for example, respective one or more passive infrared (PIR) sensors that serve to provide respective sensor signals 150 that are descriptive of motion in the area or space monitored by the respective one of the one or more PIR sensors. Other non-limiting examples of a sensor device applicable for use as the one or more presence sensors 140 include a camera and a microwave radar (both operated with applicable further analysis for detection of motion and/or presence of occupants in the space).

Along the lines described in the foregoing, the controller 120 is arranged to receive the sensor signals 150 from the one or more presence sensors 140 and to control light output from the one or more luminaires 160 accordingly, based at least in part on information received in the sensor signals 150. The control of the one or more luminaires 160 may be provided via respective one or more light control commands or signals 135 transferred from the controller 120 to the one or more luminaires 160 via respective wired or wireless communication links or via a (first) communication network that couples the controller 120 and the one or more luminaires 160 to each other. The controller 120 further provides occupancy data 130 to the server 180 for storage and further processing therein, where the occupancy data 130 may comprise at least part of the information received in the sensor signals 150 and/or information derived therefrom to the server 180. The controller 120 may further receive prediction data 185 from the server 180 to facilitate occupancy prediction in the controller 120.

Each of the one or more luminaires 160 may comprise respective one or more light sources, whereas the controller 120 may be arranged in one of the one or more luminaires 160 or the controller 120 may be arranged in an entity that is separate from the one or more luminaires 160. Each of the one or more presence sensors 140 may be arranged in one of the one or more luminaires 160, in the same entity with the controller 120, or in a respective sensor entity that is separate from the one or more luminaires 160 and from the controller 120. The light output from a given one of the one or more luminaires 160 is controlled in dependence of a respective sensor signal from at least one of the one or more presence sensors 140, whereas the sensor signal from one of the one or more sensors 140 may be applied as basis for controlling the light output from one or more of the one or more luminaires 160.

Figure 2 illustrates a block diagram of some components of the controller 120 according to an example. The controller 120 is arranged to receive a respective sensor signal 150-k from each of the one or more presence sensors 140-k. The presence sensors 140-1, 140-2, ... 140-K and the sensor signals 150-1, 150-2, ..., 150-K in the example of Figure 2 depict a general case of *K* presence sensors 140-k and the respective *K* sensor signals 150-k, where the number of presence sensors 140-k (and hence the number of sensor signals 150-k) may be one, two, three, etc. According to an example, the sensor signal 150-k from the presence sensor 104-k may be conveyed to the controller 120 via a respective (dedicated) wired or wireless communication link. As another example, the presence sensor 140-k and the controller 120 may be coupled to each other via a (second) communication network and the sensor signal 150-k from the presence sensor 140-k may be conveyed to the controller 120 via the (second) communication network.

The controller 120 comprises an occupancy determiner 125 for determining an occupancy state that indicates one of occupancy or non-occupancy based at least in part on information received in the sensor signals 150. The controller 120 further comprises a lighting controller 121 for controlling light output from at least one of the one or more luminaires 160 based at least in part on occupancy states determined by the occupancy determiner 125 via respective one or more light control commands or signals 135-n. The controller 120 may be provided with one or more lighting controllers 121, each lighting controller 121 arranged to control light output of respective one or more of the one or more luminaires 160. As a non-limiting example, the controller 120 may involve a respective dedicated lighting controller 121 for each of the luminaires 160.

The luminaires 160-1, 160-2, ..., 160-N and the light control signals 135-1, 135-2, ..., 135-N in the example of Figure 2 depict a general case of *N* luminaires 160-n and the respective *N* light control signals 135-n, where the number of luminaires 160-n (and hence the number of light control signals 130-k) may be one, two, three, etc. Along the lines described in the foregoing, the lighting controller 121 is arranged to derive the light control signal 135-n (for controlling the luminaire 160-n) based on at least one of the sensor signals 150, whereas the lighting controller 121 may be arranged to apply a sensor signal 150-k as basis for deriving the respective light control signal 135-n for one or more luminaires 160-k. Due to this relationship between the sensor signals 150 and the light control signals 135, the number of presence sensors *K* may be different from the number of luminaires *N*. The lighting controller 121 is provided with a predefined (e.g. preprogrammed) mapping between the sensor signals 150-k and the luminaires 160-n.

Each of the sensor signals 150-k conveys information that enables deriving occupancy indications in the occupancy determiner 125, whereas exact characteristics of the sensors signal 150-k depend on the type of sensor device applied as the respective presence sensor 140-k. As an example in this regard, the one or more presence sensors 140 are provided as respective one or more PIR sensors. According to an example, each PIR sensor may be arranged to provide a respective sensor signal 150-k in response to detecting motion in the portion of the space monitored by the respective PIR sensor, whereas lack of motion at a given time instant typically does not invoke an explicit signal from the PIR sensor. In other words, a PIR sensor typically does not poll motion e.g. at regular intervals but rather reacts to observed motion and reports observed motion via a respective sensor signal 150-k. Consequently, the occupancy determiner 125 may be arranged to capture respective motion events indicating motion and, if needed, respective motion events indicating lack of motion for a sequence of time events based on sensor signals received from a given PIR sensor. In another example pertaining to PIR sensors, each PIR sensor may be arranged to continuously provide a sensor signal that is indicative of the 'amount' of currently detected motion (e.g. an analog signal such as a voltage), and the occupancy determiner 125 may be arranged to capture respective motion event indicating either motion or lack of motion at regular intervals based on the sensor signal (for example based on a signal level of the sensor signal e.g. such that at a given time instant a signal level exceeding a predefined threshold results in capturing a motion event indicating motion for the given time instant and signal level that fails to exceed the threshold results in a motion event indicating lack of motion for the given time instant). In a further example, if the one or more presence sensors 140 are provided as respective cameras, each camera may provide the respective sensor signal either continuously or at predefined time intervals, whereas the occupancy determiner 125 may apply suitable signal analysis (e.g. image analysis) to derive respective motion events. Regardless of the applied sensor device type, the motion event comprises a binary indication of the motion status (e.g. motion or no motion) at the time of capturing the respective motion event. The time interval may be, for example, 60 seconds or another suitable value selected e.g. from the range from 10 to 300 seconds.

The occupancy determiner 125 records respective occupancy indications based on the motion events captured based on the respective sensors signals from the one or more presence sensors 140. In this regard, a motion event indicating motion is considered as an indication of occupancy (of one or more persons) in the space monitored by the respective presence sensor 140-k at the time instant represented by the motion event, whereas a motion event indicating lack of motion is considered as an indication of non-occupancy in the space monitored by the respective presence sensor 140-k at the time instant represented by the motion event. In the following, an occupancy indication recorded based on the sensor signal received from presence sensor 140-k at time instant *t* is denoted as *m(k, t).* The occupancy indications *m(k, t)* hence provide a respective time series of occupancy indications for each of the presence sensors 140-k. As an example, an occupancy indication *m(k, t)* may be assigned one of two values: a first value (e.g. *m(k, t)* = 1 or *m(k, t)* = *True*) to indicate that the presence sensor 140-k suggests occupancy at time instant *t* and a second value (e.g. *m(k, t)* = 0 or *m(k, t)* = *False*) to indicate that the presence sensor 140-k does not suggest occupancy (i.e. suggests non-occupancy) at time instant *t*.

The controller 120 is arranged to apply the occupancy indications *m(k, t)* for providing occupancy-based control of the light output from the one or more luminaires 160. In this regard, the lighting controller 121 may be arranged to apply predictive control of the light output based on the most recent occupancy indications *m(k, t)* and it may be further arranged to apply instantaneous control of the light output based on the most recent occupancy indications *m(k*, *t).*

As a brief summary, the instantaneous control of the light output may comprise switching the lights on or maintaining the current light output level in response to one or more of the most recent occupancy indications *m(k, t)* indicating occupancy in the space, and initiating reduction of the light output in response to the one or more of the most recent occupancy indications *m(k, t)* indicating non-occupancy. The predictive control of the light output comprises carrying out occupancy prediction based on a predefined number of the most recent occupancy indications *m(k, t)* and, consequently, adjusting the reduction of the light output in dependence of predicted occupancy in the space. Herein, the number of most recent occupancy indications *m(k, t)* applied as basis of the occupancy prediction is typically a substantially larger number of most recent occupancy indications *m(k, t)* than that applied as basis for instantaneous control. Both these aspects of the light output control are described in the following in more detail via a number of non-limiting examples.

Along the lines described in the foregoing, the lighting controller 121 is arranged to apply the predictive control of the light output, whereas in a further example, the lighting controller 121 may be arranged to further apply the instantaneous control of the light output e.g. such that either the instantaneous control or the predictive control has a preference over the other e.g. in dependence of one or more of the most recent occupancy indications *m(k, t).*

An advantage of at least partially relying on predictive control of the light output is that each of the one or more presence sensors 140 is responsive to presence of one or more persons within the field of view of the respective presence sensor 140-k and, in particular, in many scenarios the presence sensor 140-k is only responsive to *motion* within its field of view. This limitation may be especially pronounced in case of some sensor device types such as PIR sensors. The type of activity (typically) carried out in the space monitored by the presence sensor 140-k may also have a significant effect on the reliability of the presence sensor 140-k being able to correctly identify presence of one or more person therein: for example in a space that is predominantly used for having meetings, the occupant may sit still for a relatively long periods of time and hence any movement-based detection of presence may occasionally fail, whereas in a space that is predominantly used for physical exercise, the occupants rather rarely remain still for long periods of time and hence movement-based detection of presence may be somewhat more reliable. Nevertheless, occupancy prediction that is adapted based on observed presence patterns of the space in which the lighting system 100 is applied over a relatively long time period enables capturing the real presence of one or more persons in the space at improved reliability and accuracy.

As described in the foregoing, the lighting controller 121 is arranged to derive the light control signal 135-n (for controlling the luminaire 160-n) based on at least one of the sensor signals 150. In a scenario where the control signal 135-n is derived based on a single sensor signal 150-k, the relationship between the occupancy indications *m(k, t)* and the light output control is straightforward, i.e. both the instantaneous control of light output and the predictive control of light output are directly based on the occupancy indications *m(k, t)* recorded based on the sensor signal 150-k. In a typical (but non-limiting) example of a scenario where the light output from a luminaire 160-n is controlled in dependence of two or more of the sensor signals 150, both the instantaneous and predictive control of light output are directly based on the occupancy indications *m(k, t)* recorded based on the sensor signal 150-k. In a typical (but non-limiting) example of a scenario where the light output from a luminaire 160-n is controlled in dependence of two or more of the sensor signals 150, both the instantaneous and predictive control of light output are based on a combined occupancy indication *m_{d}(k, t)* derived based on the respective occupancy indications *m(k, t*) recorded on basis of the respective two or more sensor signals 150-k, e.g. such that the derived occupancy indication *m_{d}(k, t)* is assigned the first value (e.g. *m_{d}(k, t) =* 1 or *m_{d}(k, t) = True)* in case any of the two or more occupancy indications *m(k, t)* under consideration suggests occupancy and that the derived occupancy indication *m_{d}(k, t)* is assigned the second value (e.g. *m_{d}(k, t)* = 0 or *m_{d}(k, t)* = *False)* in case none of the two or more occupancy indications *m(k, t)* under consideration suggests occupancy. In the following, further examples concerning the control of the light output are described with references to (directly) using the occupancy indications *m(k, t)* recorded based on a single sensor signal 150-k to control the light output of the luminaire 160-n, whereas the examples readily generalize into a scenario where the control of the light output of one or more luminaires 160-n relies on the derived occupancy indications *m_{d}(k, t)* instead.

It should be noted, however, that the lighting controller 121 may implement also other light control actions in addition to the occupancy-based control of light output. As examples in this regard, whenever the lights are on, the lighting controller 121 may control each of the one or more luminaires 160 to provide light output at a respective fixed predefined light intensity level (e.g. a predefined percentage of the full light intensity of the respective luminaire 160-n) or at a respective light intensity level set or selected by a user of the lighting system 100. As further examples, the lighting controller 121 may automatically select the respective light intensity levels e.g. in view of the current time of the day or in dependence of observed environmental conditions (e.g. on basis of information obtained from one or more ambient light sensors) and control the light output from the one or more luminaires 160 accordingly. In the following, whenever the lights are switched on or the current light output level is maintained due to operation of the occupancy-based control, the lighting controller 121 is assumed to control each of the one or more luminaires 160 to provide light output at a respective *nominal* light intensity level defined by a control mechanism other than the occupancy-based control. In contrast, when the occupancy-based control results in reduction of the light output level of the luminaire(s) 160-n controlled based on sensor signal 150-k from the respective *nominal* light intensity level e.g. in accordance with examples described in the following.

The controller 120 is arranged to provide the occupancy indications *m(k, t)* as the occupancy data 130 to the server 180 for storage and further processing therein. The occupancy data 130 may further include indications of the light intensity level of the luminaires 160-n applied in response to the operation of the lighting controller 121, arranged as a respective time series of light intensity indications for each of the luminaires 160-n. In order to enable the transfer of occupancy data 130 from the controller 120 to the server 180, the controller 120 may be coupled to the server 180 by a (dedicated) wired or wireless communication link or the controller 120 may be coupled to the server 180 via a (third) communication network to enable provision of the occupancy indications *m(k, t)* from the controller 120 to the server 180. The server 180 provides the occupancy indications *m(k, t)* received from the controller 120 for storage in a central database in the data storage entity 182, possibly together with the (temporally) corresponding light intensity level indications. According to an example, the occupancy indications *m(k, t)* are stored in the central database such that each database entry stores a tuple including the occupancy indication *m(k, t)* and a timestamp that identifies the time instant *t,* thereby explicitly associating each database entry *m(k, t)* with the corresponding time instant *t*. In another example, each database entry of the central database stores the respective occupancy indication *m(k, t)* while each database entry is implicitly associated with a certain time instant *t*. If also the light intensity indications are provided to the server 180 as part of the occupancy data 130, the central database further stores database entries that each include an identification of the respective luminaire 160-n, respective identities of one or more sensor signals 150-k (or the respective presence sensors 140-k) applied for controlling the light output of the luminaire 160-n and a timestamp that identifies the time instant *t* to which the present database entry pertains (or, alternatively, the database entry may be implicitly associated with a certain time instant *t*)*.* The occupancy indications *m(k, t),* possibly accompanied by the light intensity indications, may be jointly referred to as lighting control data.

The central database stores the lighting control data (i.e. the occupancy indications *m(k, t),* possibly together with the corresponding light intensity indications) obtained for past time instants to enable subsequent usage of this data for occupancy prediction and/or adaptation of prediction parameters of a prediction model applied for the occupancy prediction. The central database may be arranged to store the lighting control data for most recent time instants that cover a predefined time period *T*ₕᵢₛₜ, where the number of the most recent time instants within the time period *T*ₕᵢₛₜ may be denoted as *L*ₕᵢₛₜ. The server 180 continuously receives new lighting control data from the controller 120 and updates the content of the central database accordingly such that respective lighting control data for the *L*ₕᵢₛₜ most recent time instants are stored therein. The time period *T*ₕᵢₛₜ may be assigned a suitable value from the range from a few weeks to several months, e.g. two months week.

According to an example, in addition to providing the occupancy indications *m(k, t)* to the server 180 for storage in the central database the controller 120 may further store the occupancy indications *m(k, t)* in a local database in a memory 122 provided in the controller 120 and/or in a local memory that is communicatively coupled to the controller 120. The manner of arranging the occupancy indications *m(k, t)* in the local database is similar to that described in the foregoing for the central database. The local database may be arranged to store the respective occupancy indications *m(k, t)* at least for the *L*_{back} most recent time instants, and the controller 120 continuously updates the content of the local database with the newly-recorded occupancy indications *m(k, t)* such that respective occupancy indications *m(k, t)* for the *L*_{back} most recent time instants are stored in the local database. Herein, *L*_{back} defines a lookback period for occupancy prediction by an occupancy predictor 124 as the number of occupancy indications *m(k, t),* which lookback time period corresponds to a time period *T*_{back}. This and other aspects related to the occupancy prediction are described in the following.

In another example, no dedicated local database is provided in/for the controller 120 but the controller may obtain the occupancy indications *m(k, t)* required for the occupancy prediction via the server 180 from the data storage entity 182. In this latter example, the data storage entity 182 may provide the local database as a dedicated database (that is separate from the central database) or apply a subset of the central database as the local database.

As a general rule of operation, the occupancy-based control of light output by the lighting controller 121 aims at controlling the light output from the one or more luminaires 160 such that the lights are on whenever the space monitored by the one or more presence sensors 140 is occupied by at least one person while reducing the light output in time periods during which the space is unoccupied, thereby aiming at ensuring user comfort by providing illumination whenever the space is occupied while on the other hand reducing energy consumption during time periods when the space is unoccupied.

The aspect of the lighting controller 121 providing instantaneous control of the light output of the luminaire 160-n based on the most recent occupancy indications *m(k, t)* basically comprises switching and/or keeping the lights on at the nominal light intensity level in response to the most recent occupancy indications *m(k, t)* indicating occupancy and, conversely, initiating reduction of light output in response to the most recent occupancy indications *m(k, t)* indicating non-occupancy. As a non-limiting example, the instantaneous control of the light output may comprise one or more of the following:
- if the lights are currently off (or in a stand-by state), the lighting controller 121 is arranged to switch the lights on to the nominal light intensity level in response to at least a first predefined number of the most recent occupancy indications *m(k, t)* indicating occupancy;
- if the lights are currently on at a light intensity level lower than the nominal light intensity level, the lighting controller 121 is arranged to adjust or set the light intensity level to the nominal light intensity level in response to at least a second predefined number of the most recent occupancy indications *m(k, t)* indicating occupancy;
- if the lights are currently on at the nominal light intensity level, the lighting controller 121 is arranged to maintain the nominal light intensity level in response to at least the most recent occupancy indication *m(k*, *t)* indicating occupancy;
- if the lights are currently on at the nominal light intensity level, the lighting controller 121 is arranged to initiate reduction of the light intensity level to take place (immediately) after a predefined delay period in response to at least a third predefined number of the most recent occupancy indications *m(k, t)* indicating non-occupancy.

As an example, at least one of the first and second predefined number of the most recent occupancy indications in the first and second 'rules' above may be set to one, thereby maximizing user comfort via ensuring immediate reaction to one or more persons entering the space monitored by the one or more presence sensors 140 (i.e. when the occupancy state indicated by the presence sensor 140-k changes from non-occupancy to occupancy), whereas, additionally or alternatively, the third predefined number of the most recent occupancy indications in the fourth 'rule' above may be set to one, thereby minimizing (unnecessary) energy consumption via immediately reacting to change of occupancy state from occupancy to non-occupancy. In a further example, in the first and second 'rules' above, the first predefined number may be set to a (first) value larger than one and/or the second predefined number may be set to a (second) value larger one, thereby providing improved energy efficiency via requiring at least two consecutive indications of one or more persons having entered the space monitored by the one or more presence sensors 140 before switching the lights on or adjusting the light output to the nominal light intensity level: while the further example aims at avoiding switching the lights on e.g. in response to isolated errors in presence detection by the presence sensor 140-k, this comes with the risk of compromised user comfort due to possible delay in switching on the lights or increasing the light intensity level when a person enters the space.

In the fourth 'rule' above, initiating reduction of the light intensity level may comprise directly setting or adjusting the light output of the luminaire 160-n to a predefined minimum light intensity level or dimming down the light output to the predefined minimum light intensity level via one or more intermediate light intensity levels, which minimum light intensity level may be zero light intensity (i.e. lights off) or a non-zero light intensity (e.g. 5 % or 10 % of the nominal light intensity level). As non-limiting examples in this regard, the lighting controller 121 initiating reduction of the light intensity level may comprise one of the following:
- the lighting controller 121 initiates directly adjusting the light output of the luminaire 160-n from the nominal light intensity level to the predefined minimum light intensity level after a predefined delay period.
- the lighting controller 121 initiates dimming down the light output of the luminaire 160-n from the nominal light intensity level towards the predefined minimum light intensity level via one or more intermediate light intensity levels during the predefined delay period.

In the second 'option' above, reduction of the light output (e.g. dimming down) via one or more intermediate light intensity levels may be provided, for example, by defining, in addition to the (overall) delay period and the minimum light intensity level associated therewith, one or more intermediate delay periods, each associated with a respective intermediate light intensity level and setting, after each respective intermediate delay period (since initiation of dimming down the light output), the light output of the luminaire 160-n at the intermediate light intensity level associated with the respective intermediate delay period. As a concrete example, the lighting controller 121 may define two intermediate delay periods of 3 min and 6 min associated with light intensity levels of 60 % (of the nominal light intensity level) and 30 % (of the nominal light intensity level), respectively, together with the (overall) delay period of 9 min associated with minimum light intensity level of 5 % (of the nominal light intensity level). Consequently, following initiation of the light output reduction, the lighting controller 121 may be arranged to set the light intensity level of the luminaire 160-n to 60 % after 3 min (since initiation of the light output reduction), set the light intensity level of the luminaire 160-n to 30 % after 6 min (since initiation of the light output reduction), and set the light intensity level of the luminaire 160-n to 5 % after 9 min (since initiation of the light output reduction).

The direct or stepwise reduction of the light intensity level (from the nominal light intensity level) to the minimum light intensity level described above may be implemented, for example, via usage of one or more delay timers. In one example, a single delay timer is applied to implement direct adjustment of the light intensity level at a desired moment of time: once the reduction of light intensity level is initiated, the lighting controller 121 starts the delay timer to run for the predefined delay period and sets the light intensity level of the luminaire 160-n at the predefined minimum light intensity level in response to the delay timer elapsing. In another example, two or more delay timers are applied to implement reduction of the light output of the luminaire 160-n via one or more intermediate light intensity levels to the predefined minimum light intensity level: each of the delay timers is associated with a respective intermediate delay period and with a respective intermediate light intensity level (defined e.g. as a percentage of the nominal light intensity level), where the delay timer having the longest delay period associated therewith is associated with the minimum light intensity level. In this scenario, once the reduction of light intensity level is initiated, the lighting controller 121 starts each of the two or more delay timers to run for the respective delay period and sets the light intensity level of the luminaire 160-n to the respective predefined light intensity level in response to the respective one of the delay timers elapsing. Consequently, the reduction of the light output results in predefined stepwise dimming down of the light output from the nominal light intensity level to the predefined minimum light intensity level under control of the two or more delay timers.

The aspect of the controller 120 providing predictive control of the light output of the luminaire 160-n may involve at least partially overriding or adjusting operation of the lighting controller 121 arising from the instantaneous control of the light output and issuing the lighting control commands or signals 135-n to the luminaire 160-n accordingly. In an example, overriding or adjusting operation of the lighting controller 121 arising from the instantaneous control of the light output comprises adjusting the respective delay periods associated with the one or more delay timers that may be applied to implement the direct or stepwise reduction of the light intensity level of the luminaire 160-n in dependence of a predicted occupancy state *m'ₖ* that results from the occupancy prediction. Consequently, the predicted occupancy state *m'ₖ* may be applied to adjust or override the light output control resulting from the instantaneous control of light output and controlling operation of the luminaire 160-n accordingly.

In the following, time instant *t(j)* denotes the point in time in view of which the occupancy prediction is carried out. Typically, although not necessarily, the time instant *t(j)* corresponds to current time and hence the occupancy prediction yields the predicted occupancy state *m'ₖ* that covers one or more future time instants. In an example, predictive control of the light output based on the most recent occupancy indications *m(k, t)* may involve the following steps:
- derive the predicted occupancy state *m'ₖ* in view of time instant *t(j)* based on respective occupancy indications *m(k, t)* obtained for a predefined number of time instants that precede the time instant *t(j),* wherein the predicted occupancy state *m'ₖ* comprises at least one predicted occupancy indication *m'(k, t)* for one or more time instants that follow the time instant *t(j)*; and
- adjust duration of the one or more delay periods associated with reduction of the light intensity level in dependence of the predicted occupancy state *m'ₖ.*

As described in the foregoing, the predefined number of occupancy indications *m(k, t)* that precede the time instant *t(j)* is defined as the lookback period *L*_{back}, which covers the occupancy indications *m(k, t)* within the predefined lookback time period *T*_{back} that precedes the time instant *t(j).* The occupancy prediction yields the predicted occupancy state *m'ₖ* for a predefined number of time instants that follow the time instant *t(j),* which may be denoted as a lookahead period of *L*_{ahead} that corresponds to a lookahead time period *T*_{ahead}. In other words, the occupancy prediction in view of the time instant *t(j)* yields the predicted occupancy state *m'ₖ* for the time instants *t(j*+*1)* to *t(j*+*L_{ahead})* as a function of occupancy indicated for the time instants *t(j-L_{back}*+*1)* to *t(j).* In an example, the predicted occupancy state *m'ₖ* comprises a single predicted occupancy indication *m'(k, t: t*+*L*_{ahead}*)* that applies to all time instants in the lookahead period *L*_{ahead}. In another example, the predicted occupancy state *m'ₖ* comprises a dedicated predicted occupancy indication *m'(k, t)* for each time instant within the lookahead period *L*_{ahead}.

The lookahead period *L*_{ahead} (or the corresponding lookahead time period *T*_{ahead}) is typically set to a predefined value that may be chosen, for example, in view of desired prediction accuracy/reliability, in view of the available computational resources and in view of characteristics of the space in which the lighting system 100 is applied. In general, a short lookahead period *L*_{ahead} results in more accurate prediction while it reduces the flexibility for using the predicted occupancy state *m*'*ₖ* for providing a desired trade-off between energy conservation and user comfort, whereas a long lookahead period *L*_{ahead} results in a less accurate prediction while it provides increased flexibility for using the predicted occupancy state *m'ₖ* for providing a desired trade-off between energy conservation and user comfort. The lookback period *L*_{back} (or the corresponding lookback time period *T*_{back}) may be set to fixed predefined value or it may be one of the prediction parameters that is derived and/or adapted based on the occupancy indications *m(k, t)* obtained in the past during operation of the lighting control system 110 (as described in the following). In the latter scenario, the lookback period *L*_{back} may be set to a value between predefined minimum and maximum values. In general, a short lookback period *L*_{back} results in a lower computational load with the cost of reduced prediction performance, whereas a long lookback period *L*_{back} results in improved prediction performance at the cost of increased computational load. As non-limiting examples, the lookback time period *T*_{back} may be a suitable value in a range from 30 to 300 minutes, e.g. 120 minutes, whereas the lookahead time period *T*_{ahead} may be a suitable value selected from a range from 2 to 30 minutes, e.g. 10 minutes

According to an example, the lighting controller 121 operates the occupancy predictor 124 to carry out the occupancy prediction according to a predefined schedule, e.g. at predefined time intervals. In an example, the occupancy prediction is carried out in view of each time instant for which an occupancy indication *m(k, t)* is recorded. In another example, the occupancy prediction is carried out at a lower frequency than that of recording occupancy indications *m(k, t).* As an example of the latter, the occupancy prediction may be carried out at time intervals defined by the lookahead time period *T*_{ahead}., e.g. at 10-minute intervals, or at another suitable time intervals selected e.g. from the range from 2 to 30 minutes. The most suitable schedule for carrying out the occupancy prediction (e.g. the time interval for carrying out the occupancy prediction) is a compromise between the prediction accuracy and computing power invested for carrying out the prediction and the most appropriate choice in this regard hence depends on the desired or required prediction accuracy and the available computing power.

As described in the foregoing, in an example the respective occupancy indications *m(k, t)* for time instants within the lookback period *L*_{back}, are available in the local database stored in the memory 122 and/or in a local memory that is communicatively coupled to the controller 120 and they are hence directly accessible by the occupancy predictor 124 when they are needed for the occupancy prediction. In another example, the local database is provided via the server 180 (e.g. by the data storage entity 182) and hence the occupancy predictor 124 may access the respective occupancy indications *m(k, t)* for time instants within the lookback period *L*_{back} via the server 180.

The occupancy prediction may be carried out by the occupancy predictor 124 that applies a predefined prediction model in accordance with currently defined prediction parameters. The prediction parameters may be adaptable based on occupancy indications *m(k, t)* obtained in the past during operation of the lighting control system 110. In this regard, as described in the foregoing, past values of the occupancy indications *m(k, t)* are stored and available in the central database. Examples of an applicable prediction model and prediction parameters are described in the following.

Referring back to the adjustment of the one or more delay periods associated with reduction of the light intensity level in dependence of the predicted occupancy state *m'ₖ,* the adjustment may involve setting the light intensity to the predefined minimum light intensity level without a delay and/or shortening at least one delay period associated with reduction of the light intensity level in response to the predicted occupancy state *m'ₖ* indicating non-occupancy. Additionally or alternatively, the adjustment may involve setting the light intensity to the nominal light intensity level without a delay and/or extending at least one delay period associated with reduction of the light intensity level in response to the predicted occupancy state *m'ₖ* indicating occupancy. The predicted occupancy state *m'ₖ* may be considered to indicate occupancy in case it indicates occupancy for at least one time instant within the lookahead period *L*_{ahead}, whereas the predicted occupancy state *m'ₖ* may be considered to indicate non-occupancy in case it indicates non-occupancy for all time instants within the lookahead period *L*_{ahead}

Shortening of the at least one delay period may comprise, for example, shortening all delay periods associated with reduction of light intensity level by a predefined amount of time (e.g. one minute, 90 seconds, two minutes, etc.) or by shortening all delay periods associated with reduction of light intensity level by a predefined percentage (e.g. 50 %, 100%, 200%, etc.). In another example, the each of delay periods associated with reduction of light intensity level are shortened by a respective predefined amount (defined as a respective absolute amount of time or as a respective percentage), where the amount may be different across the delay periods. In a further example, the shortening of the at least one delay period may be defined via the lookahead time period *T*_{ahead}, e.g. such that the delay periods associated with reduction of light intensity are set to a respective predefined percentage (that is less than 100%) of the lookahead time period *T*_{ahead}.

Extension of the at least one delay period may comprise, for example, extending all delay periods associated with reduction of light intensity level by a predefined amount of time (e.g. one minute, 90 seconds, two minutes, etc.) or by extending all delay periods associated with reduction of light intensity level by a predefined percentage (e.g. 50 %, 100%, 200%, etc.). In another example, the each of delay periods associated with reduction of light intensity level are extend by a respective predefined amount (defined as a respective absolute amount of time or as a respective percentage), where the amount may be different across the delay periods. In one example, at least one of delay periods (e.g. the one associated with the highest one of the intermediate light intensity levels) is extended to at least the lookahead time period *T*_{ahead}, thereby ensuring that the light output of the luminaire 160-n remains above the minimum light intensity at least through the lookahead period *L*_{ahead} of the occupancy prediction, thereby ensuring user comfort in view of the upcoming predicted occupancy within the lookahead period *L*_{ahead}. In another example, the extension of the at least one delay period associated with reduction of light intensity may be limited such that none of the extended delay periods allowed to exceed the lookahead time period *T*_{ahead}.

In a scenario where the lighting controller 121 applies the one or more delay timers to implement the reduction of the light output, the extension or shortening of the at least one delay periods associated with reduction of the light output may be implemented by directly adjusting the delay periods associated with the one or more delay timers accordingly, thereby overriding the (pre-programmed) control provided by the instantaneous control of the light output in this regard.

Extension of the at least one delay period in response to the predicted occupancy state *m'ₖ* indicating occupancy facilitates avoiding reduction of the light output to a level that might result in reduced user comfort in a scenario where the occupancy prediction suggest future occupancy within the lookahead time period *T*_{ahead}. On the other hand, shortening of the at least one delay period in response to the predicted occupancy state *m'ₖ* indicating occupancy facilitates energy-efficient operation of the lighting system 100 by speeding up reduction of the light output in a scenario where the occupancy prediction suggest future non-occupancy within the lookahead time period *T*_{ahead}.

In an example, the prediction model applied by the occupancy predictor 124 comprises an artificial neural network (ANN) arranged to derive the predicted occupancy state *m'ₖ* in view of the time instant *t(j)* based on the respective occupancy indications *m(k, t)* obtained for the *L*_{back} time instants (from *t(j-L*_{back}+*1)* to *t(j)*) that precede the time instant *t(j),* wherein the predicted occupancy state *m'ₖ* indicates the predicted occupancy for the time instants (from *t(j*+*1)* to *t(j*+*L_{ahead})*) within the lookahead period. The ANN may be implemented as a predefined neural network model, whereas parameters that define internal operations within the predefined neural network model are adaptive and may be defined and/or redefined based on training data obtained from the one or more presence sensors 140 in the course of operation of the lighting control system 110. Parameters of the ANN within the framework of the applied neural network model may be referred to as prediction parameters. The neural network model implemented by the ANN may be any a neural network type known in the art, such as a feed forward network (FFN), a recurrent neural network (RNN), a long short-term memory (LSTM) network, a bidirectional LSTM network, etc. In an example, the ANN may be implemented as a LSTM network having two encoder layers and two decoder layers, or in the case of a FFN, cascading layers depending on the structure and prediction requirements of the ANN.

Referring back to Figure 1, the server 180 may be arranged to apply the data analyzer 190 to derive the prediction parameters for the prediction model applied by the occupancy predictor 124 based on the occupancy indications *m(k, t)* derived for past time instants that are stored in the central database. The set of occupancy indications *m(k, t)* stored in the central database may be referred to as past occupancy indications *m(k, t).* Hence, the server 180 enables online adaptation of the prediction parameters during the course of operation of the lighting control system 110 based on past occupancy indications *m(k, t)* obtained during operation of the lighting control system 110. Consequently, the lighting control system enables adapting operation of the occupancy predictor 124 according to the observed occupancy in the space where the lighting system 100 is actually operated. This enables automated adaptation to the prevailing conditions and occupancy patterns, which facilitates efficient and accurate occupancy prediction and, consequently, energy efficient operation of the lighting system 100 without compromising the user comfort.

In an example, the server 180 is arranged to control the data analyzer 190 to derive new prediction parameters according to a predefined schedule. Since derivation of the prediction parameters incurs a high computational load to the back-end system 110-2, in one example the derivation of the new prediction parameters may be carried out only once upon installation, configuration or re-configuration of the lighting system 100 when there is a need to derive the initial prediction parameters after having collected a sufficient amount of lighting control data in the central database to cover the time period *T*ₕᵢₛₜ. In other examples, the derivation of the new prediction parameters may be carried out also after derivation of the initial prediction parameters, while it is still preferably carried out relatively infrequently, e.g., once a month, once in six months, once in a year, etc. In another example, additionally or alternatively, derivation of the new prediction parameters may be carried out in response to a command received from the controller 120, which in turn may receive a user command (via a user interface of the controller 120) that results in issuing the respective command to the server 180.

As an example of derivation of the (new) prediction parameters under control of the server 180, in case the prediction model applied by the occupancy predictor 124 comprises an ANN arranged to apply a predefined neural network model, the data analyzer 190 operates to derive parameters of the neural network model and to provide the derived parameters as the prediction parameters. The server 180 provides the prediction parameters obtained from the data analyzer 190 as (part of) prediction data 185 to the controller 120, where they are set as the prediction parameters applied by the occupancy predictor 124. In this regard, the prediction parameters received from the server 180 may be hence applied to replace the prediction parameters that were previously applied by the occupancy predictor 124.

Derivation of the prediction parameters by the data analyzer 190 may involve using a supervised learning technique known in the art. According to an example, supervised learning involves arranging the past occupancy indications *m(k, t)* available in the central database into a training data set that comprises a learning data set and a validation data set. Both the learning data set and the validation data set include a respective plurality of input and output pairs: for an input/output pair for time instant *t(a)* the input comprises the respective occupancy indications *m(k, t)* for time instants *t(a-L*_{back}+*1)* to *t(a)* and the output comprises the occupancy indications *m(k, t)* for time instants *t(a*+*1)* to *t(a*+*L*_{ahead}*).* The number of time instants (*L*ₕᵢₛₜ) covered by the central database is, preferably, several orders of magnitude larger than the number of time instants (*L*_{back}, *L*_{ahead}) involved in the occupancy prediction and, consequently, the occupancy indications *m(k, t)* available in the central database enable constructing a training data set and a validation data set that each include a sufficient number of input/output pairs.

In the supervised learning procedure, the size of the learning data set is preferably significantly larger than that of the validation data set. Moreover, the learning data set and the validation data set are, preferably, non-overlapping and the input/output pairs of the validation data set represent time instant that follow those (i.e. represent later points of time) than those of the learning data set.

The data analyzer 190 is arranged to apply a suitable supervised learning algorithm known in the art in order to find prediction parameters that minimize prediction error in view of the learning data set. That is, the occupancy prediction is carried out for each input/output pair of the learning data set, and the predicted occupancy state obtained via operation of the occupancy prediction based on an input of a given input/output pair compared to the output of the given input/output pair that indicates the actual occupancy data for the predicted time period. When applying an ANN as the prediction model, the supervised learning algorithm is implicitly provided by the neural network model implemented by the ANN.

In the foregoing, the operation of the lighting control system 110 with respect to the prediction parameters applied in the occupancy predictor 124 are described with references to online adaptation of the prediction parameters under control of the server 180 on basis of the occupancy indications *m(k, t)* obtained in the course of operation of the lighting control system 110. Alternatively, an offline learning may be applied instead, where the lighting control system 110 is installed in its intended location of use and the lighting control system 110 is applied to record and store the occupancy indications *m(k, t)* without applying the occupancy-based control of light output by the lighting controller 121 or by applying only the instantaneous control of the light output defined as part of the occupancy-based control of light output. Such operation may be continued for a training period of a desired duration, after which the server 180 is applied to derive initial prediction parameters for the occupancy predictor 124 for subsequent actual use of the lighting control system 110 for occupancy-based control of light output from the one or more light sources 160.

Another example of offline learning involves providing the occupancy predictor 124 with predefined default prediction parameters obtained before installation of the lighting control system 110 in its intended location of use. The default prediction parameters may be defined via usage of a similar lighting control system 110 in another location or the default prediction parameters may be based on computational data and/or simulations carried out before installing the lighting control system 110 in its intended location of use. While usage of default prediction parameters can be expected to provide compromised prediction performance, usage of the default prediction parameters may be useful in enabling occupancy prediction immediately upon installation, configuration or re-configuration of the lighting control system 110, while the default prediction parameters may be subsequently replaced with updated prediction parameters derived under control of the server 180 on basis of the occupancy indications *m(k, t)* obtained in the course of operation of the lighting control system 110 as soon as sufficient amount of occupancy indications *m(k*, *t)* is available in the central database.

The lighting control system 110 may be arranged to further make use of the information stored in the central database to estimate (reduction in) the energy consumption and/or user discomfort arising from operation of the occupancy-based control of the light output in general and from operation of the predictive control of light output in particular. Consequently, the control system 110 may be arranged to carry out one or more of the following in dependence of the estimated energy consumption and/or the estimated user discomfort:
- define or redefine operation of the predictive control of light output via redefinition of the adjustment at least one of the one or more delay periods associated with reduction of the light intensity level in dependence of the predicted occupancy state *m'ₖ*;
- trigger derivation of new prediction parameters for the prediction model applied by the occupancy predictor 124 based on the occupancy indications *m(k, t)* derived for past time instants that are stored in the central database.

As described in the foregoing, the estimated energy consumption and/or the estimated user discomfort may be derived based on the lighting control data stored in the central database. Derivation of these parameters may be carried out via the server 180, e.g. such that the server 180 applies the data analyzer 190 to derive the estimated energy consumption and/or the estimated user discomfort in response to a request or command received from the controller 120. According to an example, the lighting control data (or a predefined subset thereof) in the central database is arranged into an analysis data set that includes a time series of data entries where each data entry represents a respective time instant (of the past) and includes a timestamp identifying the respective time instant, an occupancy indication *m(k, t)* for the respective time instant and, if available in the central database, the light intensity indication for the respective time instant. The analysis data set may comprise the same lighting control data that has been employed for deriving the prediction parameters currently applied by the occupancy predictor 125 and/or lighting control data recorded and stored in the central database after the lighting control data that served as the basis for deriving the prediction parameters currently applied by the occupancy predictor 125.

As a non-limiting example, the estimated energy consumption and/or the estimated user discomfort may be derived on basis of the analysis data set via the following steps:
1. Divide the occupancy analysis data set into a sequence of (non-overlapping) time segments that each comprise a predefined number of consecutive occupancy indications *m(k, t),* e.g. *L*_{ahead} consecutive occupancy indications *m(k, t)* (corresponding to the duration of the lookahead time period *T*_{ahead}).
2. For each time segment, carry out the occupancy prediction based on *L*_{back} consecutive occupancy indications *m(k, t)* that immediately precede the respective time segment to derive predicted occupancy indications *m'(k, t)* corresponding to the time segment. The predicted occupancy indications *m'(k, t)* may be derived, for example, by application of the occupancy predictor 124 or by the server 180 (e.g. via the data analyzer 190) carrying out the occupancy prediction using the same prediction model and the same prediction parameters as the occupancy predictor 124.
3. For each time segment, simulate a set of different delay period durations (within a predefined range, e.g. from 0 to *T*_{ahead}) for reducing to the light output of the luminaire 160-n to the predefined minimum light intensity level:
   ∘ Estimate, for each simulated delay period duration in each time segment, an energy consumption (EC) value (or energy reduction value) obtainable by dimming down the light output to the minimum light intensity level after the respective simulated delay period over a period of consecutive time instants for which the predicted occupancy indications *m'(k, t)* indicate non-occupancy. Derive, based on the estimated EC values, an energy consumption function *E(p)* that is descriptive of energy consumption as a function of delay period duration *p*. Herein, if the actual energy consumption of the luminaire 160-n is not known, it can be assumed that at 80% luminosity the luminaire 160-n uses 80% of full power. This assumption may not be fully accurate, but it is suitable for the estimation purposes. Thus, if the light output is produced at 100% all of the time, energy consumption is 1 (or 100%). If lights are dimmed to 80% after, say, 5 minutes of non-occupancy, then, for a 10-minute period the energy consumption is (5*1+5*0.8)/10=0.9. Similarly, the energy consumption may be calculated for also more complicated dimming patterns. As a general rule, the longer the time delay applied for dimming the light output down and/or to switch off the light output, the more energy is consumed.
   ∘ Compute, for each simulated delay period duration in each time segment, user discomfort (UD) value by identifying the time instants of the time segment for which the occupancy indications *m(k, t)* indicate occupancy and computing a percentage of the identified time instants for which the reduction of light output according to the respective simulated delay period duration results in a light intensity level that is below a predefined light intensity threshold. Computation of the UD value may hence comprise, for example, dividing the number of those time instants of the respective time segment for which the occupancy indications *m(k, t)* indicate occupancy and for which the reduction of light output according to the respective simulated delay period duration results in a light intensity level that is below the predefined light intensity threshold by the number of all time instants of the respective time segment for which the occupancy indications *m(k, t)* indicate occupancy. Derive, based on the computed UD values, a user discomfort function D(p) that is descriptive of user discomfort as a function of delay period duration *p.*

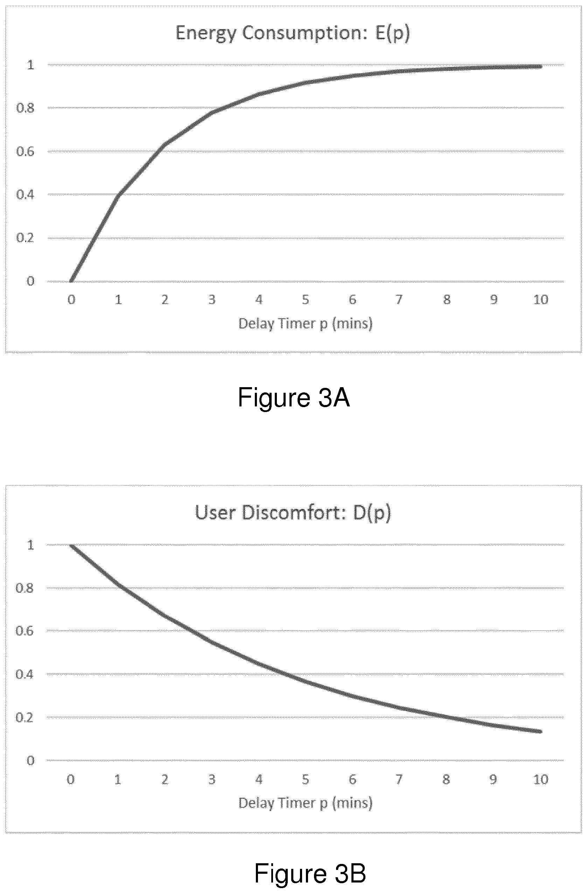

The energy consumption function *E(p)* may be provided or defined as a respective look-up table that associates two or more delay period durations within the predefined range to the respective average energy consumption (or reduction thereof) obtainable at the respective delay period duration p. Along similar lines, the user discomfort function *D(p)* may be provided or defined as a respective look-up table that associates two or more delay period durations within the predefined range to the respective average user discomfort obtainable at the respective delay period duration *p.* Figures 3A and 3B depict the energy consumption function *E(p)* and the user discomfort function *D(p)* according to respective non-limiting examples.

Once derived, the energy consumption function *E(p)* and the user discomfort function *D(p)* may be applied, for example, in one of the following ways to initialize, set or adjust the delay period(s) for predictive control of the light output:
- The controller 120 (e.g. the lighting controller 121) may be arranged to apply the energy consumption function *E(p)* to find the largest delay period duration *p* that provides (average) energy consumption that is below a predefined EC threshold and to set or adjust the one or more delay periods associated with reduction of the light intensity level as part of the predictive control of light output accordingly.
- The controller 120 (e.g. the lighting controller 121) may be arranged to apply the user discomfort function *D(p)* to find the shortest delay period duration *p* that provides (average) user discomfort that is below a predefined UC threshold and to set or adjust the one or more delay periods associated with reduction of the light intensity level as part of the predictive control of light output accordingly.

After having applied the energy consumption function *E(p)* and/or the user discomfort function *D(p)*) to set or adjust the delay periods associated with reduction of the light intensity level, the lighting control system 110 is operated such that the predictive control of the light output fully overrides the instantaneous control of the light output. In other words, instead of basing the light output control on the occupancy indications *m(k, t)* recorded for the respective time period, in each lookahead period *L*_{ahead} the light output of the luminaire 160-n is controlled in accordance with the predicted occupancy indications *m'(k, t)* derived on basis of the occupancy indications *m(k, t)* obtained for the lookback period *L*_{back}.

In the course of operation of the lighting system 100, the lighting controller 121 may be arranged to apply the occupancy predictor 124 to derive the predicted occupancy state *m'ₖ* at time intervals defined by the lookahead time period *T*_{ahead}, thereby deriving the respective predicted occupancy indications *m'(k, t)* for the time instant of the lookahead period *L*_{ahead}. Consequently, the lighting controller 121 applies the predictive control of the light output based on the predicted occupancy state *m'ₖ* derived for the respective lookahead period. After each lookahead period *L*_{ahead} an EC value and/or a UD value for the respective lookahead period *L*_{ahead} are computed along the lines described above based on the occupancy indications *m(k, t)* obtained for time instants of the respective lookahead period, on the predicted occupancy indications *m'(k, t)* derived for time instants of the respective lookahead period and on the light output provided during the respective lookahead period. The resulting EC value is to adjust the one or more delay periods in view of the EC threshold in the following manner:
- In case the EC value computed for a given lookahead period *L*_{ahead} is larger than the EC threshold, the one or more delay periods associated with reduction of the light intensity level as part of the predictive control of light output are shortened for the next lookahead period *L*_{ahead} in order to decrease the energy consumption (at the cost of increased user discomfort).
- Moreover, the resulting EC value may be applied to adjust the one or more delay periods in view of the EC threshold in the following manner:ln case the EC value computed for a given lookahead period *L*_{ahead} is not larger than the EC threshold, the one or more delay periods associated with reduction of the light intensity level as part of the predictive control of light output may be kept in their current values (since the energy consumption is considered to be low enough). Moreover, in some examples, the one or more delay periods may be extended for the next lookahead period *L*_{ahead} in case the EC value is smaller than a second EC threshold (that is smaller than or equal to the EC threshold) in order to avoid increasing user discomfort (at the cost of increased energy consumption).

Along similar lines, the resulting UD value may be applied to adjust the one or more delay periods in view of the UD threshold e.g. in one or more of the following ways:
- In case the UD value computed for a given lookahead period *L*_{ahead} is larger than the UD threshold, the one or more delay periods associated with reduction of the light intensity level as part of the predictive control of light output are extended for the next lookahead period *L*_{ahead} in order to decrease user discomfort (at the cost of increased energy consumption)
- In case the UD value computed for a given lookahead period *L*_{ahead} is not larger than the UD threshold, the one or more delay periods associated with reduction of the light intensity level as part of the predictive control of light output may be kept in their current values. Moreover, in some examples, the one or more delay periods may be shortened for the next lookahead period *L*_{ahead} in case the UD value is smaller than a second UD threshold (that is smaller than or equal to the UD threshold) in order to avoid increasing energy consumption (at the cost of increased user discomfort).

Consequently, the computation of the EC value and/or the UD value for each lookahead period *L*_{ahead} and the resulting adjustment of the delay period(s) provides a feedback loop that aims at providing a suitable tradeoff between the energy consumption and the user discomfort in view of the EC threshold and/or the UD threshold.

Additionally or alternatively, the one or both of the EC value and the UD value may be applied for deciding on triggering derivation of new prediction parameters for the prediction model applied by the predictor 124. As non-limiting examples in this regard, lighting controller 121 may initiate derivation of new predictor parameters
- in response to the repeated adjustment of the delay period failing to provide user discomfort that is below the UD threshold; and/or
- in response to the repeated adjustment of the delay period failing to provide energy consumption that is below the EC threshold.

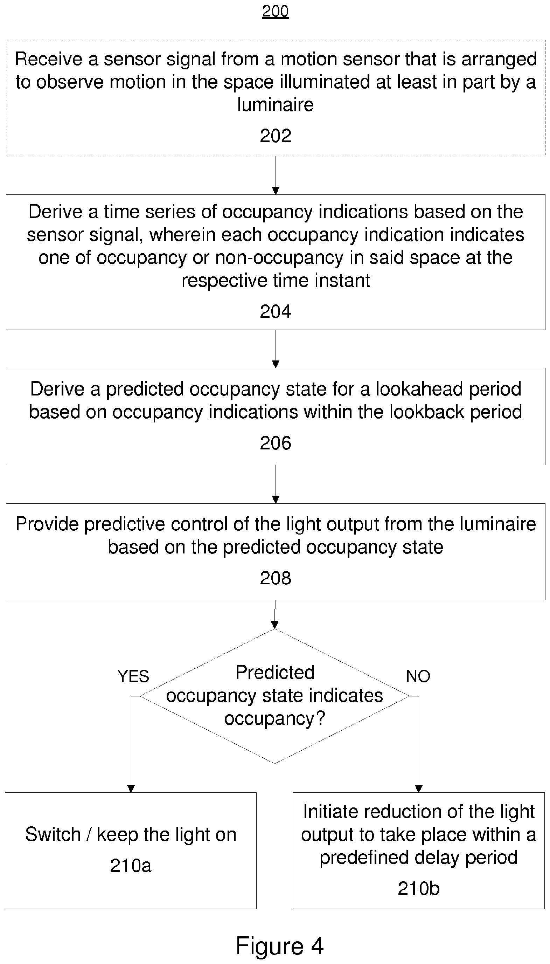

The operations etc. described in the foregoing with references to elements of the lighting control system 110 may be, alternatively, described as steps of a lighting control method. As an example in this regard, Figure 4 illustrates a flowchart depicting a method 200. The method 200 may be implemented, for example, by the lighting controller 121 for controlling the light output from the luminaire 160-n.

The method 200 may comprise receiving the sensor signal 150-k from the motion sensor 140-k that is arranged to observe motion in the space that is at least partially illuminated by the luminaire 160-n (i.e. the space in which the lighting system 100 is operated), as indicated in block 202. The method 200 comprises deriving a time series of occupancy indications *m(k, t)* based on the sensor signal 150-k, wherein each occupancy indication *m(k, t)* indicates one of occupancy or non-occupancy in said space at the respective time instant, as indicated in block 204. The method 200 further comprises deriving the predicted occupancy state *m'ₖ* for the lookahead period *L*_{ahead} based on occupancy indications *m(k, t)* within the lookback period *L*_{back}, as indicated in block 206 and providing predictive control of the light output from the luminaire 160-n based on the predicted occupancy state *m'ₖ,* as indicated in block 208. The predictive control of light output comprises one of switching or keeping the light on in response to the predicted occupancy state *m'ₖ* indicating occupancy, as indicated in block 210a, and initiating reduction of the light output to take place within the predefined delay period in response to the predicted occupancy state *m'ₖ* indicating non-occupancy, as indicated in block 210b.

The method 200 may be varied in a plurality of ways, for example in accordance with examples pertaining to respective functionality of components of the lighting system 100 provided in the foregoing and in the following.

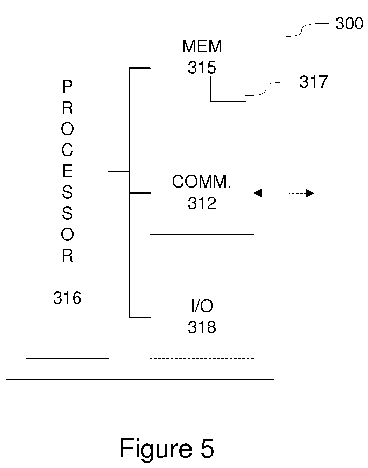

Figure 5 illustrates a block diagram of some components of an exemplifying apparatus 300. The apparatus 300 may comprise further components, elements or portions that are not depicted in Figure 5. The apparatus 300 may be employed e.g. in implementing one or more components described in the foregoing in context of the controller 120 and/or the server 180.

The apparatus 300 comprises a processor 316 and a memory 315 for storing data and computer program code 317. The memory 315 and a portion of the computer program code 317 stored therein may be further arranged to, with the processor 316, to implement at least some of the operations, procedures and/or functions described in the foregoing in context of the controller 120 and/or the server 180.

The apparatus 300 comprises a communication portion 312 for communication with other devices. The communication portion 312 comprises at least one communication apparatus that enables wired or wireless communication with other apparatuses. A communication apparatus of the communication portion 312 may also be referred to as a respective communication means.

The apparatus 300 may further comprise user I/O (input/output) components 318 that may be arranged, possibly together with the processor 316 and a portion of the computer program code 317, to provide a user interface for receiving input from a user of the apparatus 300 and/or providing output to the user of the apparatus 300 to control at least some aspects of operation of the controller 120 and/or the server 180 implemented by the apparatus 300. The user I/O components 318 may comprise hardware components such as a display, a touchscreen, a touchpad, a mouse, a keyboard, and/or an arrangement of one or more keys or buttons, etc. The user I/O components 318 may be also referred to as peripherals. The processor 316 may be arranged to control operation of the apparatus 300 e.g. in accordance with a portion of the computer program code 317 and possibly further in accordance with the user input received via the user I/O components 318 and/or in accordance with information received via the communication portion 312.

Although the processor 316 is depicted as a single component, it may be implemented as one or more separate processing components. Similarly, although the memory 315 is depicted as a single component, it may be implemented as one or more separate components, some or all of which may be integrated/removable and/or may provide permanent / semi-permanent/ dynamic/cached storage.

The computer program code 317 stored in the memory 315, may comprise computer-executable instructions that control one or more aspects of operation of the apparatus 300 when loaded into the processor 316. As an example, the computer-executable instructions may be provided as one or more sequences of one or more instructions. The processor 316 is able to load and execute the computer program code 317 by reading the one or more sequences of one or more instructions included therein from the memory 315. The one or more sequences of one or more instructions may be configured to, when executed by the processor 316, cause the apparatus 300 to carry out at least some of the operations, procedures and/or functions described in the foregoing in context of the controller 120 and/or the server 180.

Hence, the apparatus 300 may comprise at least one processor 316 and at least one memory 315 including the computer program code 317 for one or more programs, the at least one memory 315 and the computer program code 317 configured to, with the at least one processor 316, cause the apparatus 300 to perform at least some of the operations, procedures and/or functions described in the foregoing in context of the controller 120 and/or the server 180.

The computer programs stored in the memory 315 may be provided e.g. as a respective computer program product comprising at least one computer-readable non-transitory medium having the computer program code 317 stored thereon, the computer program code, when executed by the apparatus 300, causes the apparatus 300 at least to perform at least some of the operations, procedures and/or functions described in the foregoing in context of the controller 120 and/or the server 180. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. A lighting control system (110) for controlling illumination in a space, the lighting control system (110) comprising a controller (120) arranged to control light output of a luminaire (160-n) based at least in part on a sensor signal (150-k) from a motion sensor (140-k) arranged to observe movement in said space, the controller (120) comprising:
an occupancy determiner (125) arranged to derive a time series of occupancy indications based on the sensor signal (150-k), wherein each occupancy indication indicates one of occupancy or non-occupancy in said space at the respective time instant,
an occupancy predictor (124) arranged to derive a predicted occupancy state of said space for a lookahead period based on occupancy indications within a lookback period; and
a lighting controller (121) arranged to provide predictive control of the light output from the luminaire (160-n) based on the predicted occupancy state,
**characterized in that** the lighting controller (121) is further arranged to:
one of switch or keep the light on in response to the predicted occupancy state indicating occupancy, and
initiate reduction of the light output to take place within a predefined delay period in response to the predicted occupancy state indicating non-occupancy,
wherein the lighting controller (121) is further arranged to carry out the following after said lookahead period:
compute energy consumption during said lookahead period; and
shorten the duration of said predefined delay period for the next lookahead period in response to the energy consumption during said lookahead period exceeding a predefined energy consumption threshold.

2. A lighting control system (110) according to claim 1, wherein the occupancy predictor (124) is arranged derive the predicted occupancy state in view of a given time instant, wherein the lookback period comprises a first number of time instants that precede the given time instant and wherein the lookahead period comprises a second number of time instants that follow the given time instant.

3. A lighting control system (110) according to claims 1 or 2, wherein the lighting controller (121) is arranged to carry out one of the following to reduce the light output:
directly adjust the light output to a predefined minimum light intensity level after said delay period,
dim down the light output from the nominal light intensity level to the predefined minimum light intensity level via one or more intermediate light intensity levels during said predefined delay period.

4. A lighting control system (110) according to any of claims 1 to 4, where the occupancy predictor (124) is arranged to apply an artificial neural network, ANN, to derive the predicted occupancy state via application of prediction parameters that are derived based on occupancy indications obtained in the past.

5. A lighting control system (110) according to claim 4, further comprising a server (180) arranged to:
receive said occupancy indications from the controller (120);
store past occupancy indications obtained for at least a predefined number of past time instants in a central database;
derive prediction parameters for said artificial neural network based on the past occupancy indications available in the central database; and
provide the derived prediction parameters to the controller (120) for use as the prediction parameters by the occupancy predictor (124).

6. A lighting control system (110) according to any of claims 1 to 5, wherein the lighting controller (121) is arranged to carry out the following after said lookahead period:
identify all time instants of said lookahead period for which the occupancy indications indicate occupancy;
compute user discomfort as a percentage of the identified time instants during which the provided light output was below a predefined light intensity threshold; and
extend the duration of said predefined delay period for the next lookahead period in response to the user discomfort exceeding a predefined user discomfort threshold.

7. A lighting control system (110) according to any of claims 1 to 6, further comprising a server (180) arranged to:
receive said occupancy indications from the controller (120);
store past occupancy indications obtained for at least a predefined number of past time instants in a central database;
compute based on past occupancy indications available in the central database, energy consumption and/or user discomfort arising from reduction of light output during predicted non-occupancy periods; and
set the duration of said predefined delay period according to the computed energy consumption and/or to the computed user discomfort.

8. A lighting control system (110) according to claim 7, wherein
the server (180) arranged to compute the energy consumption comprises the server (180) arranged to simulate one or more predefined delay period durations for reducing the light output to derive an energy consumption function that is descriptive of computed average energy consumption in the beginning of a non-occupancy period as a function of the delay period duration;
the server (180) arranged to compute the user discomfort comprises the server (180) arranged to simulate one or more predefined delay period durations for reducing the light output to derive a user discomfort function that is descriptive of computed average user discomfort due to reduction of light output as function of the delay period duration; and
the server (180) arranged to set the duration of said predefined delay period comprises the server (180) arranged to set the duration of said predefined delay period in accordance with the energy consumption function and/or the user discomfort function.

9. A lighting control system (110) according to claim 8, wherein the server (180) is arranged to:
divide the past occupancy indications into a sequence of non-overlapping segments where each segment includes a predefined number of consecutive occupancy indications,
operate the occupancy predictor (124) to derive respective predicted occupancy state for each of said segments based on the occupancy indications that precede the respective segment,
simulate, in each segment, one or more different predefined delay period durations for reducing the light output to a predefined minimum light level; derive, for each simulated delay period and for each segment, a respective energy consumption value obtainable by dimming down the light output to said minimum light intensity level after the respective simulated delay period over a consecutive time instants for which the respective predicted occupancy state indicates non-occupancy and derive said energy consumption function based on the derived energy consumption values; and
derive, for each simulated delay period and for each segment, a respective user discomfort value as the number of time instants for which the occupancy indications of the respective segment indicate occupancy and for which the respective simulated delay period results in a light intensity level that is below the predefined light intensity threshold divided by the overall number of time instants for which the occupancy indications of the respective segment indicate occupancy and derive the user discomfort function based on the derived user discomfort values.

10. A lighting control system according to claim 8 or 9, wherein the server (180) is arranged to set the duration of said delay period in accordance with the energy consumption function comprises the server (180) arranged to:
apply the energy consumption function to identify the largest delay period duration that results in energy consumption that is below the predefined energy consumption threshold; and
set the duration of the predefined delay period to the identified value.

11. A lighting control system according to claim 8 or 9, wherein the server (180) arranged to set the duration of said delay period in accordance with the user discomfort function comprises the server (180) arranged to:
apply the user discomfort function to identify the shortest delay period duration that results in user discomfort that is below the predefined users discomfort threshold; and
set the duration of the predefined delay period to the identified value.

12. A method (200) for controlling light output from a luminaire (160-n) based at least in part on a sensor signal (150-k) from a motion sensor (140-k) arranged to observe movement in a space illuminated by the luminaire (160-n), the method (200) comprising:
deriving (204) a time series of occupancy indications based on the sensor signal (150-k), wherein each occupancy indication indicates one of occupancy or non-occupancy in said space at the respective time instant, deriving (206) a predicted occupancy state of said space for a lookahead period based on occupancy indications within a lookback period; and
providing (208) predictive control of the light output from the luminaire (160-n) based on the predicted occupancy state,
**characterized in that** the predictive control of the light output comprises one of switching or keeping (210a) the light on in response to the predicted occupancy state indicating occupancy, and
initiating (210b) reduction of the light output to take place within a predefined delay period in response to the predicted occupancy state indicating non-occupancy,
wherein the method (200) further comprises:
computing energy consumption during said lookahead period; and shortening the duration of said predefined delay period for the next lookahead period in response to the energy consumption exceeding a predefined energy consumption threshold.

13. A method (200) according to claim 12, further comprising:
identifying all time instants of said lookahead period for which the occupancy indications indicate occupancy, computing user discomfort as a percentage of the identified time instants during which the provided light output was below a predefined light intensity threshold, and extending the duration of said predefined delay period for the next lookahead period in response to the user discomfort exceeding a predefined user discomfort threshold.

14. A computer program for controlling light output from a luminaire (160-n) based at least in part on a sensor signal (150-k) from a motion sensor (140-k) arranged to observe movement in a space illuminated by the luminaire (160-n), the computer program comprising computer readable program code (317) for storage in a memory of a controller (120, 300) and configured to cause the controller (120, 300) to carry out the following when said computer readable program code (317) is executed by a processor (316) of the controller (120, 300):
derive a time series of occupancy indications based on the sensor signal (150-k), wherein each occupancy indication indicates one of occupancy or non-occupancy in said space at the respective time instant,
derive a predicted occupancy state of said space for a lookahead period based on occupancy indications within a lookback period; and
provide predictive control of the light output from the luminaire (160-n) based on the predicted occupancy state,
**characterized in that** the computer readable program code (317) is further configured to cause the controller (120, 300) to carry out the predictive control of the light output via
one of switching or keeping (210a) the light on in response to the predicted occupancy state indicating occupancy, and
initiating (210b) reduction of the light output to take place within a predefined delay period in response to the predicted occupancy state indicating non-occupancy, and
wherein the computer readable program code (317) is further configured to cause the controller (120, 300) to carry out the following:
compute energy consumption during said lookahead period; and
shorten the duration of said predefined delay period for the next lookahead period in response to the energy consumption exceeding a predefined energy consumption threshold.

## Patentansprüche

1. Beleuchtungssteuersystem (110) zum Steuern einer Beleuchtung in einem Raum, wobei das Beleuchtungssteuersystem (110) eine Steuerung (120) umfasst, eingerichtet zum Steuern einer Lichtausgabe einer Leuchte (160-n) zumindest teilweise basierend auf einem Sensorsignal (150-k) von einem Bewegungssensor (140-k), eingerichtet zum Beobachten einer Bewegung in dem Raum, wobei die Steuerung (120) Folgendes umfasst:
einen Belegungsbestimmer (125), eingerichtet zum Ableiten einer Zeitreihe von Belegungsangaben basierend auf dem Sensorsignal (150-k), wobei jede Belegungsangabe entweder Belegung oder Nichtbelegung in dem Raum zu dem jeweiligen Zeitpunkt angibt,
einen Belegungsprädiktor (124), eingerichtet zum Ableiten eines vorhergesagten Belegungszustands des Raums für eine Lookahead-Periode basierend auf Belegungsangaben in einer Lookback-Periode; und
eine Beleuchtungssteuerung (121), eingerichtet zum Bereitstellen einer prädiktiven Steuerung der Lichtausgabe von der Leuchte (160-n) basierend auf dem vorhergesagten Belegungszustand,
**dadurch gekennzeichnet, dass** die Beleuchtungssteuerung (121) ferner zu Folgendem eingerichtet ist:
entweder Einschalten oder Eingeschaltetlassen des Lichts als Reaktion darauf, dass der vorhergesagte Belegungszustand Belegung angibt, und
Initiieren, dass eine Reduktion der Lichtausgabe innerhalb einer vordefinierten Verzögerungsperiode stattfindet, als Reaktion darauf, dass der vorhergesagte Belegungszustand Nichtbelegung angibt,
wobei die Beleuchtungssteuerung (121) ferner eingerichtet ist zum Ausführen des Folgenden nach der Lookahead-Periode:
Berechnen eines Energieverbrauchs während der Lookahead-Periode; und
Verkürzen der Dauer der vordefinierten Verzögerungsperiode für die nächste Lookahead-Periode als Reaktion darauf, dass der Energieverbrauch während der Lookahead-Periode eine vorbestimmte Energieverbrauchsschwelle überschreitet.

2. Beleuchtungssteuersystem (110) nach Anspruch 1, wobei der Belegungsprädiktor (124) eingerichtet ist zum Ableiten des vorhergesagten Belegungszustands hinsichtlich eines gegebenen Zeitpunkts, wobei die Lookback-Periode eine erste Anzahl von Zeitpunkten umfasst, die dem gegebenen Zeitpunkt vorausgehen, und wobei die Lookahead-Periode eine zweite Anzahl von Zeitpunkten umfasst, die dem gegebenen Zeitpunkt folgen.

3. Beleuchtungssteuersystem (110) nach Anspruch 1 oder 2, wobei die Beleuchtungssteuerung (121) eingerichtet ist zum Ausführen eines der Folgenden, um die Lichtausgabe zu reduzieren:
direktes Anpassen der Lichtausgabe an ein vorbestimmtes minimales Lichtintensitätsniveau nach der Verzögerungsperiode,
Herunterdimmen der Lichtausgabe von dem Nennlichtintensitätsniveau auf das vorbestimmte minimale Lichtintensitätsniveau über ein oder mehrere Zwischenlichtintensitätsniveaus während der vorbestimmten Verzögerungsperiode.

4. Belastungssteuersystem (110) nach einem der Ansprüche 1 bis 4, wobei der Belegungsprädiktor (124) eingerichtet ist zum Anwenden eines künstlichen neuronalen Netzes, ANN, zum Ableiten des vorhergesagten Belegungszustands über Anwendung von Vorhersageparametern, die basierend auf in der Vergangenheit erhaltenen Belegungsangaben abgeleitet werden.

5. Beleuchtungssteuersystem (110) nach Anspruch 4, ferner umfassend einen Server (180), der zu Folgendem eingerichtet ist:
Empfangen der Belegungsangaben von der Steuerung (120); Speichern vergangener Belegungsangaben, die für zumindest eine vordefinierte Anzahl vergangener Zeitpunkte erhalten wurden, in einer zentralen Datenbank; Ableiten von Vorhersageparametern für das künstliche neuronale Netz basierend auf den in der zentralen Datenbank verfügbaren vergangenen Belegungsangaben; und Liefern der abgeleiteten Vorhersageparameter an die Steuerung (120) zur Verwendung als die Vorhersageparameter durch den Belegungsprädiktor (124).

6. Beleuchtungssteuersystem (110) nach einem der Ansprüche 1 bis 5, wobei die Beleuchtungssteuerung (121) eingerichtet ist zum Ausführen des Folgenden nach der Lookahead-Periode:
Identifizieren aller Zeitpunkte der Lookahead-Periode, für die die Belegungsangaben Belegung angeben;
Berechnen eines Benutzerunbehagens als Prozentsatz der identifizierten Zeitpunkte, während derer die bereitgestellte Lichtausgabe unterhalb einer vorbestimmten Lichtintensitätsschwelle lag; und
Erweitern der Dauer der vordefinierten Verzögerungsperiode für die nächste Lookahead-Periode als Reaktion darauf, dass das Benutzerunbehagen eine vordefinierte Benutzerunbehagen-Schwelle überschreitet.

7. Beleuchtungssteuersystem (110) nach einem der Ansprüche 1 bis 6, ferner umfassend einen Server (180), der zu Folgendem eingerichtet ist:
Empfangen der Belegungsangaben von der Steuerung (120);
Speichern vergangener Belegungsangaben, die für zumindest eine vordefinierte Anzahl vergangener Zeitpunkte erhalten wurden, in einer zentralen Datenbank; Berechnen, basierend auf in der zentralen Datenbank verfügbaren Belegungsangaben, eines Energieverbrauchs und/oder eines Benutzerunbehagens, die sich aus einer Reduktion der Lichtausgabe während vorhergesagten Nichtbelegungsperioden ergeben; und
Einstellen der Dauer der vordefinierten Verzögerungsperiode gemäß dem berechneten Energieverbrauch und/oder dem berechneten Benutzerunbehagen.

8. Beleuchtungssteuersystem (110) nach Anspruch 7, wobei
der Server (180), eingerichtet zum Berechnen des Energieverbrauchs, den Server (180) umfasst, eingerichtet zum Simulieren einer oder mehrerer vordefinierter Verzögerungsperiodendauern zum Reduzieren der Lichtausgabe, um eine Energieverbrauchsfunktion abzuleiten, die einen berechneten mittleren Energieverbrauch zu Beginn einer Nichtbelegungsperiode als Funktion der Verzögerungsperiodendauer beschreibt;
der Server (180), eingerichtet zum Berechnen des Benutzerunbehagens, den Server (180) umfasst, eingerichtet zum Simulieren einer oder mehrerer vordefinierter Verzögerungsperiodendauern zum Reduzieren der Lichtausgabe, um eine Benutzerunbehagen-Funktion abzuleiten, die ein berechnetes mittleres Benutzerunbehagen aufgrund einer Reduktion der Lichtausgabe als Funktion der Verzögerungsperiodendauer beschreibt; und
der Server (180), eingerichtet zum Einstellen der Dauer der vordefinierten Verzögerungsperiode, den Server (180) umfasst, eingerichtet zum Einstellen der Dauer der vordefinierten Verzögerungsperiode gemäß der Energieverbrauchsfunktion und/oder der Benutzerunbehagen-Funktion.

9. Beleuchtungssteuersystem (110) nach Anspruch 8, wobei der Server (180) zu Folgendem eingerichtet ist:
Unterteilen der vergangenen Belegungsangaben in eine Sequenz nichtüberlappender Segmente, wobei jedes Segment eine vordefinierte Anzahl aufeinanderfolgender Belegungsangaben beinhaltet,
Betreiben des Belegungsprädiktors (124) zum Ableiten eines jeweiligen vorhergesagten Belegungszustands für jedes der Segmente basierend auf den Belegungsangaben, die dem jeweiligen Segment vorausgehen,
Simulieren, in jedem Segment, einer oder mehrerer unterschiedlicher vordefinierter Verzögerungsperiodendauern zum Reduzieren der Lichtausgabe auf ein vordefiniertes minimales Lichtniveau;
Ableiten, für jede simulierte Verzögerungsperiode und für jedes Segment, eines jeweiligen Energieverbrauchswerts, erhaltbar durch Herunterdimmen der Lichtausgabe auf das minimale Lichtintensitätsniveau nach der jeweiligen simulierten Verzögerungsperiode über aufeinanderfolgende Zeitpunkte, für die der jeweilige vorhergesagte Belegungszustand Nichtbelegung angibt, und Ableiten der Energieverbrauchsfunktion basierend auf den abgeleiteten Energieverbrauchswerten; und
Ableiten, für jede simulierte Verzögerungsperiode und für jedes Segment, eines jeweiligen Benutzerunbehagen-Werts als die Anzahl von Zeitpunkten, für die die Belegungsangaben des jeweiligen Segments Belegung angeben und für die die jeweilige simulierte Verzögerungsperiode zu einem Lichtintensitätsniveau führt, das unterhalb der vordefinierten Lichtintensitätsschwelle dividiert durch die Gesamtanzahl von Zeitpunkten, für die die Belegungsangaben des jeweiligen Segments Belegung angeben, liegt, und Ableiten der Benutzerunbehagen-Funktion basierend auf den abgeleiteten Benutzerunbehagen-Werten.

10. Beleuchtungssteuersystem nach Anspruch 8 oder 9, wobei der Server (180), eingerichtet zum Einstellen der Dauer der Verzögerungsperiode gemäß der Energieverbrauchsfunktion, den Server (180) umfasst, der zu Folgendem eingerichtet ist:
Anwenden der Energieverbrauchsfunktion, um die größte Verzögerungsperiodendauer zu identifizieren, die zu einem Energieverbrauch führt, der unterhalb der vordefinierten Energieverbrauchsschwelle liegt; und
Einstellen der Dauer der vordefinierten Verzögerungsperiode auf den identifizierten Wert.

11. Beleuchtungssteuersystem nach Anspruch 8 oder 9, wobei der Server (180), eingerichtet zum Einstellen der Dauer der Verzögerungsperiode gemäß dem Benutzerunbehagen-Funktion, den Server (180) umfasst, der zu Folgendem ausgelegt ist:
Anwenden der Benutzerunbehagen-Funktion, um die kürzeste Verzögerungsperiodendauer zu identifizieren, die zu einem Benutzerunbehagen führt, der unterhalb der vordefinierten Benutzerunbehagen-Schwelle liegt; und
Einstellen der Dauer der vordefinierten Verzögerungsperiode auf den identifizierten Wert.

12. Verfahren (200) zum Steuern einer Lichtausgabe von einer Leuchte (160-n), zumindest teilweise basierend auf einem Sensorsignal (150-k) von einem Bewegungssensor (140-k), eingerichtet zum Beobachten einer Bewegung in einem durch die Leuchte (160-n) beleuchteten Raum, wobei das Verfahren (200) Folgendes umfasst:
Ableiten (204) einer Zeitreihe von Belegungsangaben basierend auf dem Sensorsignal (150-k), wobei jede Belegungsangabe entweder Belegung oder Nichtbelegung in dem Raum zu dem jeweiligen Zeitpunkt angibt,
Ableiten (206) eines vorhergesagten Belegungszustands des Raums für eine Lookahead-Periode basierend auf Belegungsangaben in einer Lookback-Periode; und Bereitstellen (208) einer prädiktiven Steuerung der Lichtausgabe von der Leuchte (160-n) basierend auf dem vorhergesagten Belegungszustand,
**dadurch gekennzeichnet, dass** die prädiktive Steuerung der Lichtausgabe Folgendes umfasst:
entweder Einschalten oder Eingeschaltetlassen (210a) des Lichts als Reaktion darauf, dass der vorhergesagte Belegungszustand Belegung angibt, und
Initiieren (210b), dass eine Reduktion der Lichtausgabe innerhalb einer vordefinierten Verzögerungsperiode stattfindet, als Reaktion darauf, dass der vorhergesagte Belegungszustand Nichtbelegung angibt,
wobei das Verfahren (200) ferner Folgendes umfasst:
Berechnen eines Energieverbrauchs während der Lookahead-Periode; und
Verkürzen der Dauer der vordefinierten Verzögerungsperiode für die nächste Lookahead-Periode als Reaktion darauf, dass der Energieverbrauch eine vorbestimmte Energieverbrauchsschwelle überschreitet.

13. Verfahren (200) nach Anspruch 12, das ferner Folgendes umfasst:
Identifizieren aller Zeitpunkte der Lookahead-Periode, für die die Belegungsangaben Belegung angeben, Berechnen eines Benutzerunbehagens als Prozentsatz der identifizierten Zeitpunkte, während derer die bereitgestellte Lichtausgabe unterhalb einer vorbestimmten Lichtintensitätsschwelle lag, und Erweitern der Dauer der vordefinierten Verzögerungsperiode für die nächste Lookahead-Periode als Reaktion darauf, dass das Benutzerunbehagen eine vordefinierte Benutzerunbehagen-Schwelle überschreitet.

14. Computerprogrammprodukt zum Steuern einer Lichtausgabe von einer Leuchte (160-n), zumindest teilweise basierend auf einem Sensorsignal (150-k) von einem Bewegungssensor (140-k), eingerichtet zum Beobachten einer Bewegung in einem durch die Leuchte (160-n) beleuchteten Raum, wobei das Computerprogrammprodukt computerlesbaren Programmcode (317) zum Speichern in einem Speicher einer Steuerung (120, 300) umfasst und dazu ausgelegt ist, zu bewirken, dass die Steuerung (120, 300) das Folgende ausführt, wenn der computerlesbare Programmcode (317) durch einen Prozessor (316) der Steuerung (120, 300) ausgeführt wird:
Ableiten einer Zeitreihe von Belegungsangaben basierend auf dem Sensorsignal (150-k), wobei jede Belegungsangabe entweder Belegung oder Nichtbelegung in dem Raum zu dem jeweiligen Zeitpunkt angibt,
Ableiten eines vorhergesagten Belegungszustands des Raums für eine Lookahead-Periode basierend auf Belegungsangaben in einer Lookback-Periode; und
Bereitstellen einer prädiktiven Steuerung der Lichtausgabe von der Leuchte (160-n) basierend auf dem vorhergesagten Belegungszustand,
**dadurch gekennzeichnet, dass** der computerlesbare Programmcode (317) ferner dazu ausgelegt ist, zu bewirken, dass die Steuerung (120, 300) die prädiktive Steuerung der Lichtausgabe durch Folgendes ausführt:
entweder Einschalten oder Eingeschaltetlassen (210a) des Lichts als Reaktion darauf, dass der vorhergesagte Belegungszustand Belegung angibt, und
Initiieren (210b), dass eine Reduktion der Lichtausgabe innerhalb einer vordefinierten Verzögerungsperiode stattfindet, als Reaktion darauf, dass der vorhergesagte Belegungszustand Nichtbelegung angibt, und
wobei der computerlesbare Programmcode (317) ferner dazu ausgelegt ist, zu bewirken, dass die Steuerung (120, 300) Folgendes ausführt:
Berechnen eines Energieverbrauchs während der Lookahead-Periode; und
Verkürzen der Dauer der vordefinierten Verzögerungsperiode für die nächste Lookahead-Periode als Reaktion darauf, dass der Energieverbrauch eine vorbestimmte Energieverbrauchsschwelle überschreitet.

## Revendications

1. Système de commande d'éclairage (110) pour commander l'éclairage dans un espace, le système de commande d'éclairage (110) comprenant un contrôleur (120) agencé pour commander l'émission de lumière d'un luminaire (160-n) sur la base, au moins en partie, d'un signal de capteur (150-k) provenant d'un capteur de mouvement (140-k) agencé pour observer le mouvement dans ledit espace, le contrôleur (120) comprenant :
un déterminateur d'occupation (125) agencé pour dériver une série temporelle d'indications d'occupation sur la base du signal de capteur (150-k), où chaque indication d'occupation indique soit une occupation, soit une non-occupation dans ledit espace à l'instant respectif,
un prédicteur d'occupation (124) agencé pour dériver un état d'occupation prédit dudit espace pour une période d'anticipation sur la base d'indications d'occupation dans une période d'anticipation ; et
un contrôleur d'éclairage (121) agencé pour fournir une commande prédictive de l'émission de lumière du luminaire (160-n) sur la base de l'état d'occupation prédit,
**caractérisé en ce que** le contrôleur d'éclairage (121) est en outre agencé pour :
soit commuter ou maintenir la lumière allumée en réponse à l'état d'occupation prédit indiquant une occupation, et
initier la réduction de l'émission de lumière pour qu'elle ait lieu dans une période de temporisation prédéfinie en réponse à l'état d'occupation prédit indiquant la non-occupation,
où le contrôleur d'éclairage (121) est en outre agencé pour exécuter les étapes suivantes après ladite période d'anticipation :
calculer la consommation d'énergie pendant ladite période d'anticipation ; et
raccourcir la durée de ladite période de temporisation prédéfinie pour la période d'anticipation suivante en réponse au fait que la consommation d'énergie pendant ladite période d'anticipation a dépassé une valeur prédéfinie.

2. Système de commande d'éclairage (110) selon la revendication 1, dans lequel le prédicteur d'occupation (124) est agencé pour dériver l'état d'occupation prédit en vue d'un instant donné, où la période de retour en arrière comprend un premier nombre d'instants qui précèdent l'instant donné et où la période d'anticipation comprend un second nombre d'instants qui suivent l'instant donné.

3. Système de commande d'éclairage (110) selon la revendication 1 ou la revendication 2, dans lequel le contrôleur d'éclairage (121) est agencé pour exécuter l'une des étapes suivantes pour réduire l'émission de lumière :
ajuster directement l'émission de lumière à un niveau d'intensité lumineuse minimal prédéfini après ladite période de temporisation,
réduire l'émission de lumière du niveau d'intensité lumineuse nominal au niveau d'intensité lumineuse minimal prédéfini par l'intermédiaire d'un ou plusieurs niveaux d'intensité lumineuse intermédiaires pendant ladite période de temporisation prédéfinie.

4. Système de commande d'éclairage (110) selon l'une quelconque des revendications 1 à 4, dans lequel le prédicteur d'occupation (124) est agencé pour appliquer un réseau neuronal artificiel, ANN, pour dériver l'état d'occupation prédit par l'intermédiaire de l'application de paramètres de prédiction qui sont dérivés sur la base d'indications d'occupation obtenues dans le passé.

5. Système de commande d'éclairage (110) selon la revendication 4, comprenant en outre un serveur (180) agencé pour :
recevoir lesdites indications d'occupation depuis le contrôleur (120) ;
stocker les indications d'occupation passées obtenues pour au moins un nombre prédéfini d'instants passés dans une base de données centrale ;
dériver des paramètres de prédiction pour ledit réseau neuronal artificiel sur la base des indications d'occupation passées disponibles dans la base de données centrale ; et
fournir les paramètres de prédiction dérivés au contrôleur (120) pour être utilisés comme paramètres de prédiction par le prédicteur d'occupation (124).

6. Système de commande d'éclairage (110) selon l'une quelconque des revendications 1 à 5, dans lequel le contrôleur d'éclairage (121) est agencé pour exécuter les étapes suivantes après ladite période d'anticipation :
identifier tous les instants de ladite période d'anticipation pour lesquels les indications d'occupation indiquent une occupation ;
calculer l'inconfort de l'utilisateur en tant que pourcentage des instants identifiés pendant lesquels l'émission de lumière fournie était inférieure à un seuil d'intensité lumineuse prédéfini ; et
étendre la durée de ladite période de temporisation prédéfinie pour la période d'anticipation suivante en réponse à l'inconfort de l'utilisateur dépassant un seuil d'inconfort de l'utilisateur prédéfini.

7. Système de commande d'éclairage (110) selon l'une quelconque des revendications 1 à 6, comprenant en outre un serveur (180) agencé pour :
recevoir lesdites indications d'occupation depuis le contrôleur (120) ;
stocker les indications d'occupation passées obtenues pour au moins un nombre prédéfini d'instants passés dans une base de données centrale ;
calculer, sur la base des indications d'occupation passées disponibles dans la base de données centrale, la consommation d'énergie et/ou l'inconfort de l'utilisateur résultant de la réduction de l'émission de lumière pendant les périodes de non-occupation prédites ; et
régler la durée de ladite période de temporisation prédéfinie en fonction de la consommation d'énergie calculée et/ou de l'inconfort de l'utilisateur calculée.

8. Système de commande d'éclairage (110) selon la revendication 7, dans lequel
le serveur (180) agencé pour calculer la consommation d'énergie comprend le serveur (180) agencé pour simuler une ou plusieurs durées de période de temporisation prédéfinies pour réduire l'émission de lumière afin de dériver une fonction de consommation d'énergie qui est descriptive de la consommation d'énergie moyenne calculée au début d'une période de non-occupation en fonction de la durée de la période de temporisation ;
le serveur (180) agencé pour calculer l'inconfort de l'utilisateur comprend le serveur (180) agencé pour simuler une ou plusieurs durées de période de temporisation prédéfinies pour réduire l'émission de lumière afin de dériver une fonction d'inconfort de l'utilisateur qui est descriptive de l'inconfort moyen calculé de l'utilisateur dû à la réduction de l'émission de lumière en fonction de la durée de la période de temporisation ; et
le serveur (180) agencé pour fixer la durée de ladite période de temporisation prédéfinie comprend le serveur (180) agencé pour fixer la durée de ladite période de temporisation prédéfinie en fonction de la fonction de consommation d'énergie et/ou de la fonction d'inconfort de l'utilisateur.

9. Système de commande d'éclairage (110) selon la revendication 8, dans lequel le serveur (180) est agencé pour :
diviser les indications d'occupation passée en une séquence de segments non chevauchants où chaque segment comprend un nombre prédéfini d'indications d'occupation consécutives,
faire fonctionner le prédicteur d'occupation (124) pour dériver un état d'occupation prédit respectif pour chacun desdits segments sur la base des indications d'occupation qui précèdent le segment respectif,
simuler, dans chaque segment, une ou plusieurs durées différentes de période de temporisation prédéfinie pour réduire l'émission de lumière à un niveau de lumière minimal prédéfini ;
dériver, pour chaque période de temporisation simulée et pour chaque segment, une valeur de consommation d'énergie respective pouvant être obtenue en réduisant l'émission de lumière audit niveau d'intensité lumineuse minimal après la période de temporisation simulée respective sur des instants consécutifs pour lesquels l'état d'occupation prédit respectif indique la non-occupation, et dériver ladite fonction de consommation d'énergie sur la base des valeurs de consommation d'énergie dérivées ; et
dériver, pour chaque période de temporisation simulée et pour chaque segment, une valeur d'inconfort de l'utilisateur respective en tant que nombre d'instants pour lesquels les indications d'occupation du segment respectif indiquent une occupation, et pour lesquels la période de temporisation simulée respective résulte en un niveau d'intensité lumineuse qui est inférieur au seuil d'intensité lumineuse prédéfini divisé par le nombre total d'instants pour lesquels les indications d'occupation du segment respectif indiquent une occupation, et dériver la fonction d'inconfort de l'utilisateur sur la base des valeurs d'inconfort de l'utilisateur dérivées.

10. Système de commande d'éclairage selon la revendication 8 ou la revendication 9, dans lequel le serveur (180) est agencé pour définir la durée de ladite période de temporisation en fonction de la fonction de consommation d'énergie, le serveur (180) étant agencé pour :
appliquer la fonction de consommation d'énergie pour identifier la plus grande durée de période de temporisation qui conduit à une consommation d'énergie qui est inférieure au seuil de consommation d'énergie prédéfini ; et
définir la durée de la période de temporisation prédéfinie à la valeur identifiée.

11. Système de commande d'éclairage selon la revendication 8 ou la revendication 9, dans lequel le serveur (180) agencé pour définir la durée de ladite période de temporisation conformément à la fonction d'inconfort de l'utilisateur comprend que le serveur (180) est agencé pour :
appliquer la fonction d'inconfort de l'utilisateur pour identifier la durée de période de temporisation la plus courte qui conduit à un inconfort de l'utilisateur qui est inférieur au seuil d'inconfort de l'utilisateur prédéfini ; et
définir la durée de la période de temporisation prédéfinie à la valeur identifiée.

12. Procédé (200) de commande de l'émission de lumière d'un luminaire (160-n) basé, au moins en partie, sur un signal de capteur (150-k) provenant d'un capteur de mouvement (140-k) agencé pour observer le mouvement dans un espace éclairé par le luminaire (160-n), le procédé (200) comprenant les étapes suivantes :
dériver (204) une série temporelle d'indications d'occupation sur la base du signal de capteur (150-k), où chaque indication d'occupation indique soit une occupation, soit une non-occupation dans ledit espace à l'instant respectif,
dériver (206) un état d'occupation prédit dudit espace pour une période d'anticipation sur la base d'indications d'occupation dans une période d'anticipation ; et
fournir (208) une commande prédictive de l'émission de lumière du luminaire (160-n) sur la base de l'état d'occupation prédit,
**caractérisé en ce que** la commande prédictive de l'émission de lumière comprend soit de commuter, soit de maintenir allumée (210a) la lumière en réponse à l'état d'occupation prédit indiquant une occupation, et
initier (210b) la réduction de l'émission de lumière pour qu'elle ait lieu dans une période de temporisation prédéfinie en réponse à l'état d'occupation prédit indiquant la non-occupation,
où le procédé (200) comprend en outre les étapes suivantes :
calculer la consommation d'énergie pendant ladite période d'anticipation ; et
raccourcir la durée de ladite période de temporisation prédéfinie pour la période d'anticipation suivante en réponse au fait que la consommation d'énergie pendant ladite période d'anticipation a dépassé une valeur prédéfinie.

13. Procédé (200) selon la revendication 12, comprenant en outre les étapes suivantes :
identifier tous les instants de ladite période d'anticipation pour lesquels les indications d'occupation indiquent une occupation, calculer l'inconfort de l'utilisateur en tant que pourcentage des instants identifiés pendant lesquels l'émission de lumière fournie était inférieure à un seuil d'intensité lumineuse prédéfini, et étendre la durée de ladite période de temporisation prédéfinie pour la période d'anticipation suivante en réponse à l'inconfort de l'utilisateur dépassant un seuil d'inconfort de l'utilisateur prédéfini.

14. Programme informatique pour commander l'émission de lumière d'un luminaire (160-n) sur la base, au moins en partie, d'un signal de capteur (150-k) provenant d'un capteur de mouvement (140-k) agencé pour observer un mouvement dans un espace éclairé par le luminaire (160-n), le programme informatique comprenant un code de programme lisible par ordinateur (317) pour un stockage dans une mémoire d'un contrôleur (120, 300) et étant configuré pour amener le contrôleur (120, 300) à exécuter les étapes suivantes lorsque ledit code de programme lisible par ordinateur (317) est exécuté par un processeur (316) du contrôleur (120, 300) :
dériver une série temporelle d'indications d'occupation sur la base du signal de capteur (150-k), où chaque indication d'occupation indique soit une occupation, soit une non-occupation dans ledit espace à l'instant respectif,
dériver un état d'occupation prédit dudit espace pour une période d'anticipation sur la base des indications d'occupation dans une période de retour en arrière ; et
fournir une commande prédictive de l'émission de lumière du luminaire (160-n) sur la base de l'état d'occupation prédit,
**caractérisé en ce que** le code de programme lisible par ordinateur (317) est en outre configuré pour amener le contrôleur (120, 300) à exécuter la commande prédictive de l'émission de lumière par l'intermédiaire :
soit de la commutation, soit du maintien (210a) de la lumière allumée en réponse à l'état d'occupation prédit indiquant une occupation, et
de l'initiation (210b) d'une réduction de l'émission de lumière pour qu'elle ait lieu dans une période de temporisation prédéfinie en réponse à l'état d'occupation prédit indiquant la non-occupation, et
où le code de programme lisible par ordinateur (317) est en outre configuré pour amener le contrôleur (120, 300) à exécuter les étapes suivantes :
calculer la consommation d'énergie pendant ladite période d'anticipation ; et
raccourcir la durée de ladite période de temporisation prédéfinie pour la période d'anticipation suivante en réponse au fait que la consommation d'énergie pendant ladite période d'anticipation a dépassé une valeur prédéfinie.
